(19) Europäisches Patentamt
European Patent Office
Office européen des brevets

(11) **EP 4 434 349 A1**

(12) **EUROPEAN PATENT APPLICATION**

(43) Date of publication:
**25.09.2024 Bulletin 2024/39**

(21) Application number: **23164095.4**

(22) Date of filing: **24.03.2023**

(51) International Patent Classification (IPC):
**A23C 9/12** *(2006.01)* **A23C 9/142** *(2006.01)*
**A23J 1/20** *(2006.01)* **A23J 3/10** *(2006.01)*
**A23L 33/19** *(2016.01)* **A23L 33/00** *(2016.01)*
**A23C 19/05** *(2006.01)*

(52) Cooperative Patent Classification (CPC):
**A23L 33/40; A23C 9/1209; A23C 9/1422;
A23C 19/05; A23J 1/202; A23J 3/10; A23L 33/19**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Société des Produits Nestlé S.A.
1800 Vevey (CH)**

(72) Inventors:
• GOULDING, David
  SY16 Co. Kerry (IE)
• O'REGAN, Jonathan
  Killarney, V93E1T2 (IE)

• VAN DER SCHAAF, Jasper Melle
  8701JX, Bolsward (NL)
• KELLY, Alan L.
  Cork, P31 XD62 (IE)
• O'MAHONY, Seamus
  Cork, T56 NW65 (IE)

(74) Representative: **Gagliardi, Tatiana
Société des Produits Nestlé S.A.
Avenue Nestlé 55
1800 Vevey (CH)**

Remarks:
The complete document including Reference Table(s) and the Sequence Listing(s) can be downloaded from the EPO website

(54) **METHOD FOR OBTAINING BETA-CASEIN**

(57) The present invention relates to a method for obtaining β-casein from a milk protein source, the method comprising the steps: a) cooling the milk protein source to a temperature sufficient to release β-casein from the micelles containing β-casein; and b) separating β-casein from the cooled milk protein source by membrane filtration to form a permeate enriched in β-casein; and, wherein the method further comprises: pre-treating the milk protein source with chymosin before and/or during step a); and/or treating the permeate enriched in β-casein with chymosin after step b).

EP 4 434 349 A1

**Description**

FIELD OF THE INVENTION

The present invention relates, in general, to methods of fractionation and purification of β-casein. In particular, the methods of the invention can be used for the selective purification of β-casein without co-enrichment of κ-casein or casein macropeptide. The present invention is also directed to nutritional compositions comprising the resulting β-casein ingredient and to the manufacture of cheese having improved properties.

BACKGROUND TO THE INVENTION

Breastfeeding is highly recommended for the first six months of life to achieve optimal growth and development. Mothers who are unable or choose not to breastfeed could alternatively use infant formulas (IFs) to nourish their babies. Typically, IFs are made with ingredients derived from bovine milk. Due to the inherent differences between bovine and human milk, is desirable to alter bovine milk composition to enable manufacturing of bovine-based IFs which more closely resemble human milk. For example, whey proteins are added to bovine milk to simulate the whey-to-casein ratio and nutritional characteristics of human milk. Further optimization of the whey protein fraction has led to the manufacturing of whey ingredients enriched in α-lactalbumin to increase its content in IF with the aim of reproducing the functional benefits of human milk (Lien, E. L, The American journal of clinical nutrition, 2003, 77:1555S-1558S). By contrast, the optimization of the casein fraction, notably β-casein, in IF has been less studied to date.

Caseins are known to form micelles that bind and transport minerals (e.g. calcium) essential for growth and development (Gaucheron, F., Reprod. Nutr. Dev., 2005, 45:473-483). β-casein is an amphiphilic phosphoprotein, consisting of a hydrophilic N-terminal domain and a hydrophobic C-terminal domain. The molecular weight of β-casein is ~24 kDa and the isoelectric point is approximately 4.8-5.2. The β-casein fraction in human milk is primarily the A2 genotype and comprises 50-85% of the total casein in human milk (Cuillière et al., 1999; Donovan, 2019). In bovine milk, several genetic variants are observed.

Purified β-casein molecules under specific conditions of pH, temperature, ionic strength and total protein concentration self-associate in micelles, ranging up to 600 nm in diameter with an average size of ~50 nm (Dauphas et al., 2005; O'Connell et al., 2003). The size of these micelles is correlated to several parameters such as κ-casein:β-casein ratio, phosphorylation and the degree of glycosylation. The assembly of casein micelles probably proceeds via two routes; hydrophobic interaction between groups on different molecules and calcium phosphate nanoclusters acting as a neutralizing bridge between two negatively charged phosphoseryl clusters. Small amounts of calcium phosphate together with serum ionic calcium play a significant role in micellar structure. Furthermore, in human milk, the β-casein micelles are stabilised on the surface by k-casein through steric and electrostatic interactions, in a similar manner to that in bovine casein micelles. Due to phosphorylation, the protein contains a relatively high net negative charge, both the presence of hydrophobic interactions and the formation of calcium bridges are important for the micelle formation.

Caseins represent approximately 80% of the total protein in bovine milk but only 40% in human milk. β-casein is the major casein in human milk, representing up to 68% of total caseins compared to -36% in bovine milk (Layman et al., Nutrition reviews, 2018, 76: 444-460), and the higher β- to α-casein ratio in human milk has been associated with a softer and finer coagulum in the stomach of infants (Nakai, S. and E. Li-Chan, Food Structure, 1987, 6:Article 8). This and other differences including protein content, size and structure of casein micelles also affect the extent of protein digestion by modulating the accessibility of digestive enzymes (Cavell, B, Acta Pædiatrica, 1981, 70: 639-641; and Huppertz, T. and L. W. Chia, International Dairy Journal, 2021, 113). This in turn may lead to differences in rate of peptide and amino acid delivery to the small intestine and the bloodstream.

Producing an IF enriched in β-casein to bring its composition closer to that of human milk may thus provide health benefits beyond its nutritional value (Almeida et al., International Journal of Food Science, 2021: 8850080). β-casein and k-casein are the primary casein constituents of human milk, and their peptides have shown numerous biological activities (e.g., antimicrobial, angiotensin-converting enzyme (ACE) inhibition, dipeptidyl peptidase IV(DPP-IV) inhibition, opioid agonist and antagonist activities, immunomodulation, mineral binding, and antioxidative functions) (Nielsen et al., Food Chemistry, 2017, 232: 673-682).

β-casein ingredients can currently be manufactured from various dairy sources (e.g., skim milk, whole milk, milk protein concentrate, micellar casein concentrate). Different approaches exist to enrich for β-casein, but the most common techniques are selective solubilization and precipitation as well as cold microfiltration (summarised in Atamer et al., International Dairy Journal, 2017, 66: 115-125). The majority of methods are impractical for commercial use. Moreover, since the precipitation techniques often involve application of chemicals (Atamer et al., International Dairy Journal, 2017, 66: 115-125), microfiltration is a cleaner way to produce an ingredient for use in IF.

Microfiltration is a physical separation technique based on the selective partitioning of molecules in the serum phase. These membrane filtration processes are typically performed using β-casein sources which are either heated or cooled to micellize or monomerize β-casein, respectively. Thus, by controlling the temperature of the filtration feed source, β-casein can be selectively fractionated based on molecular size.

In particular, cold microfiltration separates β-casein in the serum phase at cold temperature (Creamer et al., New Zealand Journal of Dairy Science and Technology, 1977, 12: 58-66; Atamer et al., International Dairy Journal, 2017, 66: 115-125; and McCarthy et al., International Dairy Journal, 2017, 73: 57-62). At room temperature, about 95% of the caseins are present in the form of micelles while the remaining 5% (mainly composed of β-casein) are in the serum phase. Upon cooling, β-casein dissociates from the casein micelles and migrates to the serum phase (Creamer et al., New Zealand Journal of Dairy Science and Technology, 1977, 12: 58-66). This migration depends on several factors such as temperature and time, presence of calcium ions (diafiltration with water solubilizes more β-casein), and pH. Dissociated β-casein can then be separated from casein micelles by filtration to generate a β-casein enriched ingredient. The purity of the β-casein enriched ingredient manufactured can be determined based on the starting material chosen, the process parameters, the efficiency of the process and the extent of diafiltration, amongst other factors.

A drawback of these existing solutions is that other proteins, most typically κ-casein, are coenriched with β-casein during the process. It would be desirable for some applications (including some infant nutritional solutions) to reduce or remove the κ-casein from β-casein ingredients. At present there is no feasible solution to remove κ-casein from such β-casein ingredients. To the best of the inventors' knowledge, the use of chymosin as part of a microfiltration process for purification of β-casein has not been studied before.

The low protein content of nutritional compositions for infant and children, such as infant formulas, requires that strategically designed protein ingredients are used to achieve formulations which have a desirable protein profile and amino acid profile. A desirable profile is typically that which closely resembles human milk. For example, whey-to-casein ratio and total β-casein content are controlled in such nutritional compositions in order to better reflect the composition of human breast milk. Thus, in some recipes it is desirable to use purified protein fractions which do not contribute other components which would not fit the recipe requirements. In particular, it is desirable to be able to use a source of β-casein (the predominant casein in human milk) which is highly pure and free of other caseins.

There is therefore a need in the art for an improved process which permits the specific enrichment of β-casein from dairy sources.

## SUMMARY OF THE INVENTION

The present inventors have surprisingly found that a highly pure β-casein ingredient can be manufactured by microfiltration without co-enrichment of κ-casein or casein macropeptide by using chymosin as a processing aid strategy to reduce the κ-casein content in the manufactured β-casein ingredients. The resulting β-casein ingredient had a high purity (for example, of about 90% w/w protein), without detectable levels of κ-casein or casein macropeptide. Surprisingly, the use of the chymosin enzyme did not result in significant hydrolysis of β-casein.

A further advantage of this process is the production of a β-casein depleted ingredient, which may be advantageous for certain downstream applications, such as cheese making.

Accordingly, in a first aspect, the invention provides a method for obtaining β-casein from a milk protein source, the method comprising the steps:

a) cooling the milk protein source to a temperature sufficient to release β-casein from the micelles containing β-casein; and

b) separating β-casein from the cooled milk protein source by membrane filtration to form a permeate enriched in β-casein; and

wherein the method further comprises:

pre-treating the milk protein source with chymosin during step a); and/or

treating the permeate enriched in β-casein with chymosin after step b).

In some embodiments, steps a) and b) are carried out at a temperature of less than about 15 °C.

In some embodiments, steps a) and b) are performed at a temperature in the range of from about 2 °C to about 10 °C.

In some embodiments, step a) is performed for about 6 to about 48 hours.

In some embodiments, pre-treating the milk protein source with chymosin and/or treating the permeate enriched in β-casein with chymosin is performed at a temperature in the range of from about 2 °C to about 10 °C.

In some embodiments, pre-treating the milk protein source with chymosin and/or treating the permeate enriched in β-casein with chymosin is performed for about 6 to about 48 hours.

In some embodiments, the membrane filtration is performed using a polymeric microfiltration membrane or a ceramic microfiltration membrane.

In some embodiments, the polymeric microfiltration membrane comprises polyether sulfone (PES) or polyvinylidene fluoride (PVDF).

In some embodiments, the permeate enriched in β-casein obtained in step b) or the chymosin-treated permeate enriched in β-casein obtained after step b) comprises κ-casein in an amount of less than about 8 % (w/w of total protein).

In some embodiments, step b) is repeated multiple times and the resulting permeates enriched in β-casein are combined.

In some embodiments, the method further comprises the step of demineralizing the permeate enriched in β-casein after step b) or after treating the permeate enriched in β-casein with chymosin.

In some embodiments, the method further comprises one or more of the following steps:

drying the permeate enriched in β-casein obtained in step b) or the chymosin-treated permeate enriched in β-casein obtained after step b);

concentrating the permeate enriched in β-casein obtained in step b) or the chymosin-treated permeate enriched in β-casein obtained after step b); and/or

sterilising the permeate enriched in β-casein obtained in step b) or the chymosin-treated permeate enriched in β-casein obtained after step b).

In some embodiments, the milk protein source is selected from skim milk, whole milk, buttermilk, milk protein concentrate, milk protein isolate, β-casein concentrate, β-casein isolate, micellar casein isolate and micellar casein concentrate.

In some embodiments, the β-casein is organic β-casein or A2 β-casein.

In some embodiments, the milk protein source has been obtained by:

heating a source material at a temperature sufficient to associate β-casein into micelles;

depleting whey proteins from the source material by membrane filtration at a temperature sufficient to separate the whey protein from the source material to form a retentate enriched in β-casein;

diluting the retentate enriched in β-casein to form the milk protein source.

In some embodiments, the method further comprises the steps of:

heating the permeate enriched in β-casein at a temperature sufficient to re-associate the β-casein into micelles, optionally following the step of treating the permeate enriched in β-casein with chymosin;

depleting whey proteins from the heated permeate enriched in β-casein by membrane filtration at a temperature sufficient to separate the whey protein from the permeate enriched in β-casein to form a retentate enriched in β-casein;

optionally, drying the retentate enriched in β-casein.

In some embodiments, the steps of heating the source material or permeate enriched in β-casein and depleting the whey proteins are carried out at a temperature in the range of 16 °C to 70 °C.

In some embodiments, the retentate enriched in β-casein comprises κ-casein in an amount of less than about 8 % (w/w of total protein).

In a further aspect, the invention provides a β-casein enriched product obtained by the method of the invention.

In a further aspect, the invention provides a nutritional composition comprising the β-casein enriched product obtained by the method of the invention.

In some embodiments, in the nutritional composition is an infant formula, a starter infant formula, a follow-on or follow-up infant formula, a baby food, an infant cereal composition, a growing-up milk, a fortifier or a supplement.

BRIEF DESCRIPTION OF THE FIGURES

**Figure 1:** Schematic overview of the isolation procedure.

**Figure 2:** Protein profile of MCC, STD, P-CHY, CHY-P and Skimmed milk powder (SMP) determined using Ultra-performance liquid chromatography-high-resolution mass spectrometry (UPLC-HRMS), displayed as % of relative protein signal, legend included in figure.

**Figure 3:** Signal intensity of β-casein concentration in the various material preparations demonstrating that treatment of feedstock or permeate for 24h at 5°C with chymosin showed minimal breakdown of the β-casein content.

DETAILED DESCRIPTION OF THE INVENTION

**General definitions**

Milk from different species of animals may be used in the context of the present invention. Thus, the term **"milk"** as used herein refers to the lacteal secretion of, e.g., humans, cows, sheep, goats, buffaloes or camels. For commercial process, typically milk from cows, sheep, goats, buffaloes or camels are used.

As used herein, the term **"membrane filtration"** refers to the process of using a membrane filter to separate a mixture. In the dairy industry, membrane filters are typically used in separation and/or fractionation processes to separate milk into fractions and to remove molecules from milk, based on molecular size. Ceramic membrane filters are typically used in the dairy industry. Molecules which may be removed from milk include milk proteins such as whey and caseins.

The term **"microfiltration"** (MF) as used herein means a type of filtration, driven by a pressure gradient, which typically uses membrane pore sizes of about 0.2 to 2.0 μm and pressures on the upstream side of the membrane ranging from 100 to 500 kPa.

As used herein, the term **"diafiltration"** is used to mean a type of filtration in which the retentate is diluted with solvent and re-filtered, to reduce the concentration of soluble permeate components and further increase the concentration of retained components. A combined MF and diafiltration separation and/or fractionation step may be used, where MF is performed in combination with diafiltration, i.e., the retentate is diluted with solvent and re- filtered through a MF membrane.

As used herein, the term **"permeate"** refers to the liquid product of the membrane filtration step which contains only those milk protein source components that are able to pass through the filtration membrane. For example, in the context of the cold membrane filtration step of the present invention, the permeate is enriched for β-casein compared to the starting milk protein source, i.e. it contains an increased % w/w total solids of β-casein.

As used herein, the term **"retentate"** refers to the liquid product of the membrane filtration step which contains only those milk protein source components that are unable to pass through the filtration membrane. Thus, the retentate is the remaining fluid that has become enriched with compounds that could not permeate the membrane. For example, in the context of the cold membrane filtration step of the present invention, the retentate is enriched for whey protein and depleted in β-casein compared to the starting milk protein source, i.e. it contains an increased % w/w total solids of whey protein and a decreased % w/w/ total solids of β-casein.

The term **"milk protein source"** as used herein refers to any source of milk proteins which comprises β-casein. Suitably, the milk protein source may be skim milk, whole milk, buttermilk, milk protein concentrate, milk protein isolate, β-casein concentrate, β-casein isolate, micellar casein isolate and micellar casein concentrate. Suitably, the method of the invention may be used to further enrich a milk protein source (e.g., a β-casein concentrate, β-casein isolate, micellar casein isolate and micellar casein concentrate) for β-casein.

As used herein, the term **"demineralization"** refers to the removal of ionized minerals and salts (both organic and inorganic) from a solution. For example, demineralization of a permeate refers to removal of ions, e.g. calcium and other ions, from the permeate.

The expression **"nutritional composition"** means a composition which nourishes a subject. This nutritional composition is usually to be taken orally or parenterally, and it usually includes a lipid or fat source and a protein source. A carbohydrate source may also be included. In one embodiment, the nutritional composition of the invention is a synthetic nutritional composition.

In a particular embodiment, the combination or composition of the present invention is a "synthetic combination" or "synthetic nutritional composition". The expression **"synthetic combination"** or **"synthetic nutritional composition"** means a mixture obtained by chemical and/or biological means, which can be chemically identical to the mixture naturally occurring in mammalian milks (i.e. the synthetic combination or synthetic composition is not breast milk).

The expression **"infant formula"** as used herein refers to a foodstuff intended for particular nutritional use by infants during the first months of life and satisfying by itself the nutritional requirements of this category of person (Article 2(c) of the European Commission Directive 91/321/EEC 2006/141/EC of 22 December 2006 on infant formulae and follow-on formulae). It also refers to a nutritional composition intended for infants and as defined in Codex Alimentarius (Codex STAN 72-1981) and Infant Specialities (incl. Food for Special Medical Purpose). The expression "infant formula" encompasses both "starter infant formula" and "follow-up formula" or "follow-on formula".

A **"follow-up formula"** or **"follow-on formula"** is given from the 6th month onwards. It constitutes the principal liquid element in the progressively diversified diet of this category of person.

The expression **"baby food"** means a foodstuff intended for particular nutritional use by infants or young children during the first years of life.

The expression **"infant cereal composition"** means a foodstuff intended for particular nutritional use by infants or young children during the first years of life.

The expression **"growing-up milk"** (or GUM) refers to a milk-based drink generally with added vitamins and minerals, that is intended for young children or children.

The term **"fortifier"** refers to liquid or solid nutritional compositions suitable for fortifying or mixing with human milk, infant formula, growing-up milk or human breast milk fortified with other nutrients. Accordingly, the fortifier of the present invention can be administered after dissolution in human breast milk, in infant formula, in growing-up milk or in human breast milk fortified with other nutrients or otherwise it can be administered as a stand-alone composition. When administered as a stand-alone composition, the milk fortifier of the present invention can be also identified as being a "supplement". In one embodiment, the milk fortifier of the present invention is a supplement.

The expression **"weaning period"** means the period during which the mother's milk is substituted by other food in the diet of an infant or young child.

The expressions **"days/weeks/months/years of life"** and **"days/weeks/months/years after birth"** can be used interchangeably.

The **"mother's milk"** should be understood as the breast milk or the colostrum of the mother.

An **"oligosaccharide"** is a saccharide polymer containing a small number (typically three to ten) of simple sugars (monosaccharides).

The term **"galacto-oligosaccharides"** refers to a type of non-digestible fiber with prebiotic activity. GOS are formed via enzymatic conversion of lactose. GOS generally comprise a chain of galactose units that arise through consecutive transgalactosylation reactions, with a terminal glucose unit, although a terminal galactose unit may be present instead. The degree of polymerization of GOS typically ranges from 2 to 8 monomeric units.

The term **"HMO"** or **"HMOs"** refers to human milk oligosaccharide(s). These carbohydrates are highly resistant to enzymatic hydrolysis, indicating that they may display essential functions not directly related to their caloric value. It has especially been illustrated that they play a vital role in the early development of infants and young children, such as the maturation of the immune system. Many different kinds of HMOs are found in the human milk. Each individual oligosaccharide is based on a combination of glucose, galactose, sialic acid (N-acetylneuraminic acid), fucose and/or N-acetylglucosamine with many and varied linkages between them, thus accounting for the enormous number of different oligosaccharides in human milk - over 130 such structures have been identified so far. Almost all of them have a lactose moiety at their reducing end while sialic acid and/or fucose (when present) occupy terminal positions at the non-reducing ends. The HMOs can be acidic (e.g. charged sialic acid containing oligosaccharide) or neutral (e.g. fucosylated oligosaccharide).

The combination or nutritional composition of the present invention can be in solid form (e.g. powder) or in liquid form. The amount of the various ingredients (e.g. the oligosaccharides) can be expressed in **g/100g** of composition on a dry weight basis when it is in a solid form, e.g. a powder, or as a concentration in **g/L** of the composition when it refers to a liquid form (this latter also encompasses liquid composition that may be obtained from a powder after reconstitution in a liquid such as milk, water..., e.g. a reconstituted infant formula or a follow-on/follow-up formula or a growing-up milk or an infant cereal product or any other formulation designed for infant nutrition).

The term **"prebiotic"** means non-digestible carbohydrates that beneficially affect the host by selectively stimulating the growth and/or the activity of healthy bacteria such as bifidobacteria in the colon of humans (Gibson GR, Roberfroid MB. Dietary modulation of the human colonic microbiota: introducing the concept of prebiotics. J Nutr. 1995;125:1401-12).

The term **"probiotic"** means microbial cell preparations or components of microbial cells with a beneficial effect on the health or well-being of the host. (Salminen S, Ouwehand A. Benno Y. et al. "Probiotics: how should they be defined" Trends Food Sci. Technol. 1999:10 107-10). The microbial cells are generally bacteria or yeasts.

The term "cfu" should be understood as colony-forming unit.

In the present context, the term **"cheese"** may be any kind of cheese and includes, e.g., natural cheese, cheese analogues and processed cheese. The cheese maybe obtained by any suitable process known in the art, such as, e.g., by enzymatic coagulation of the cheese milk with rennet, or by acidic coagulation of the cheese milk with food grade acid or acid produced by lactic acid bacteria growth.

**Method for obtaining β-casein**

The present inventors have surprisingly found that a highly pure β-casein ingredient can be manufactured by microfiltration without co-enrichment of κ-casein or casein macropeptide by using chymosin to reduce the κ-casein and casein macropeptide content in the manufactured β-casein ingredients. Various membrane filtration approaches have been studied for the fractionation of β-casein and β-casein-enriched whey from skimmed milk or micellar casein. These filtration processes are generally split in two approaches, warm-then-cold (WTC) and cold-then-warm (CTW). Warm filtration of skimmed milk removes the whey protein fraction, making a micellar casein stream, which can subsequently be depleted of β-casein using a cold filtration step. Alternatively, cold filtration can be applied to manufacture a β-casein-enriched whey permeate, from which the β-casein aggregates can be separated, at increased temperatures, using filtration.

Accordingly, in a first aspect, the invention provides a method for obtaining β-casein from a milk protein source, the method comprising the steps:

a) cooling the milk protein source to a temperature sufficient to release β-casein from the micelles containing β-casein; and

b) separating β-casein from the cooled milk protein source by membrane filtration to form a permeate enriched in β-casein; and

wherein the method further comprises:

pre-treating the milk protein source with chymosin before and/or during step a); and/or

treating the permeate enriched in β-casein with chymosin after step b).

Thus, in some embodiments, the method comprises the steps:

a') pre-treating the milk protein source with chymosin;

a) cooling the milk protein source to a temperature sufficient to release β-casein from the micelles containing β-casein; and

b) separating β-casein from the cooled milk protein source by membrane filtration to form a permeate enriched in β-casein.

In some alternative embodiments, the method comprises the steps:

a) pre-treating the milk protein source with chymosin and cooling the milk protein source to a temperature sufficient to release β-casein from the micelles containing β-casein; and

b) separating β-casein from the cooled milk protein source by membrane filtration to form a permeate enriched in β-casein.

Treating the milk protein source with chymosin and cooling the milk protein source to a temperature sufficient to release β-casein from the micelles containing β-casein may be carried out simultaneously.

In some alternative embodiments, the method comprises the steps:

a) cooling the milk protein source to a temperature sufficient to release β-casein from the micelles containing β-casein;

b) separating β-casein from the cooled milk protein source by membrane filtration to form a permeate enriched in β-casein; and

c) treating the permeate enriched in β-casein with chymosin.

Suitably, pre-treating the milk protein source with chymosin forms a milk protein source which is depleted of κ-casein and/or casein macropeptide.

Suitably, treating the permeate enriched in β-casein with chymosin forms a permeate which is depleted of κ-casein and/or casein macropeptide.

Any suitable cold microfiltration method for obtaining β-casein from a milk protein source which is known in the art may be used in the practice of the present invention (see, for example, Creamer et al., New Zealand Journal of Dairy Science and Technology, 1977, 12: 58-66; Atamer et al., International Dairy Journal, 2017, 66: 115-125; and McCarthy et al., International Dairy Journal, 2017, 73: 57-62). Atamer et al. (2017) provide a review of such methods (Atamer et al., International Dairy Journal, 2017, 66: 115-125). Thus, it is well within the ambit of the skilled person to optimise the process conditions in order to purify β-casein from a milk protein source by cold microfiltration. Suitably, the method described herein may be used in the practice of the invention (see Example).

In some embodiments, steps a) and b) are carried out at a temperature of less than about 15 °C. Suitably, steps a) and b) are carried out at a temperature of less than about 10 °C. Preferably, steps a) and b) are carried out at a temperature of less than about 5 °C.

In some embodiments, steps a) and b) are performed at a temperature in the range of from about 0 °C to about 15 °C. Suitably, steps a) and b) are performed at a temperature in the range of from about 2 °C to about 10 °C, such as from about 4 °C to about 8 °C, such as from about 6 °C to about 8 °C.

In some embodiments, steps a) and b) are carried out at the same temperature.

In alternative embodiments, steps a) and b) are carried out at different temperatures.

In some embodiments, step a) is performed for about 6 to about 48 hours. Suitably, step a) is performed for about 12 to about 36 hours, such as for about 18 hours to about 24 hours. Suitably, step a) is performed for about 18 hours.

During this time, β-casein dissociates from the casein micelles into the serum phase of the milk protein source. The dissociated β-casein molecules are present in monomeric form at this low temperature range and are recovered in the permeate during the subsequent microfiltration step b).

In some embodiments, step b) is performed for about 6 to about 48 hours. Suitably, step b) is performed for about 12 to about 36 hours, such as for about 18 hours to about 24 hours. Suitably, step b) is performed for about 18 hours.

Pre-treating the milk protein source and/or treating the permeate with chymosin may be performed at any temperature suitable for the hydrolysis of κ-casein. Suitably, pre-treating the milk protein source and/or treating the permeate with chymosin is performed at a temperature of from 0 °C to about 45 °C. Suitably, pre-treating the milk protein source and/or treating the permeate with chymosin is performed at a temperature of from about 20 °C to about 40 °C. Higher temperatures may lead to efficiency savings since the desired hydrolysis of κ-casein is achieved more quickly.

Suitably, treating the permeate with chymosin is performed at a temperature of from 0 °C to about 45 °C. Suitably, treating the permeate with chymosin is performed at a temperature of from about 20 °C to about 40 °C.

Suitably, pre-treating the milk protein source and/or permeate with chymosin is performed at a temperature in the range of from 0 °C to about 15 °C, such as from about 2 °C to about 10 °C, such as from about 4 °C to about 8 °C, such as from about 6 °C to about 8 °C.

In some embodiments, pre-treating the milk protein source and/or permeate with chymosin is performed at a temperature of less than about 15 °C. Suitably, pre-treating the milk protein source and/or permeate with chymosin is performed at a temperature of less than about 10 °C. Preferably, pre-treating the milk protein source and/or permeate with chymosin is performed at a temperature of less than about 5 °C.

In some embodiments, pre-treating the milk protein source with chymosin is carried out at the same temperature as step a).

In some embodiments, pre-treating the milk protein source with chymosin is carried out at a different temperature to step a).

In some embodiments, treating the permeate with chymosin is carried out at the same temperature as step b).

In some embodiments, treating the permeate with chymosin is carried out at a different temperature to step b).

The duration of treatment with chymosin required for the desired degree of hydrolysis of κ-casein depends upon the conditions, concentration of enzyme and substrate (e.g. the milk protein source used). It is well within the capabilities of the skilled person to determine a suitable duration for treatment with chymosin. For example, the amount and/or hydrolysis of κ-casein can be determined using the methods described herein.

In some embodiments, pre-treating the milk protein source and/or permeate with chymosin is performed for about 30 minutes to about 48 hours, such as from about 6 to about 48 hours, such as for about 12 to about 36 hours, such as for about 18 hours to about 24 hours. Suitably, pre-treating the milk protein source and/or permeate with chymosin is performed for about 18 hours.

In some embodiments, pre-treating the milk protein source with chymosin is carried out for the same duration as step a).

In some embodiments, pre-treating the milk protein source with chymosin is carried out with a different duration to step a).

In some embodiments, treating the permeate with chymosin is carried out at for the same duration as step b).

In some embodiments, treating the permeate with chymosin is carried out at with a different duration to step b).

Any suitable chymosin enzyme may be used in the practice of the present invention.

The enzyme chymosin (EC 3.4.23.4) is a protease found in rennet. It is an aspartic endopeptidase belonging to MEROPS A1 family. Chymosin is secreted as its zymogen in the abomasal mucosa of newborn and adolescent ruminants and permits said ruminant to curdle the milk they ingest.

The chymosin for use in the present invention may be derived from any suitable ruminant animal. For example, the chymosin enzyme may be derived from cows, sheep, goats, buffaloes or camels. Preferably, the chymosin is camel chymosin. The chymosin enzyme may be produced by any suitable means known in the art, for example, the chymosin may be a recombinant chymosin, preferably a recombinant camel chymosin.

An illustrative amino acid sequence for camel chymosin is set forth below:

```
MRCLVVLLAALALSQASGITRIPLHKGKTLRKALKERGLLEDFLQRQQYAVSSKYSSLGKVAREPLTS

YLDSQYFGKIYIGTPPQEFTVVFDTGSSDLWVPSIYCKSNVCKNHHRFDPRKSSTFRNLGKPLSIHYG

TGSMEGFLGYDTVTVSNIVDPNQTVGLSTEQPGEVFTYSEFDGILGLAYPSLASEYSVPVFDNMMDRH

LVARDLFSVYMDRNGQGSMLTLGAIDPSYYTGSLHWVPVTLQQYWQFTVDSVTINGVAVACVGGCQAI

LDTGTSVLFGPSSDILKIQMAIGATENRYGEFDVNCGNLRSMPTVVFEINGRDYPLSPSAYTSKDQGF

CTSGFQGDNNSELWILGDVFIREYYSVFDRANNRVGLAKAI (SEQ ID NO: 1)
```

In some embodiments, the chymosin comprises an amino acid sequence having at least 85% sequence identity to the sequence set forth in SEQ ID NO: 1. Preferably, the chymosin comprises an amino acid sequence having at least 90% sequence identity to the sequence set forth in SEQ ID NO: 1. Suitably, comprises an amino acid sequence having at least 91%, 92%, 93%, 94%, 95%, 96%, 97%, 98% or 99% sequence identity to the sequence set forth in SEQ ID NO: 1. Suitably, the chymosin comprises an amino acid sequence as set forth in SEQ ID NO: 1.

In some embodiments, the chymosin comprises only two negatively charged residues in the binding sites for the positively charged regions of κ-casein which are chymosin-sensitive.

As described herein, it is desirable to produce a highly pure β-casein ingredient which can be manufactured by microfiltration without co-enrichment of κ-casein. Hence, in preferred embodiments of the invention, a chymosin having a high degree of specificity for κ-casein is used. Suitably, the chymosin has a high degree of specificity for κ-casein compared to β-casein. Suitably, the chymosin shows a low degree of hydrolysis of β-casein as a substrate.

The specificity of chymosin enzymatic action on individual dairy proteins can be determined by incubating a known molarity of chymosin enzyme solution with a solution containing a known total protein concentration whereby the protein profile contains equal relative abundances of the proteins under investigation (e.g., beta casein, kappa casein). The incubation may be performed in a dynamic approach over time while controlling conditions of pH, ionic strength and temperature. Interim samples may be collected at time 0, timepoint N, timepoint N+1 and so on. The enzyme in the samples may then be immediately inactivated by adding a chymosin enzyme inhibitor to quench the enzyme activity. Samples may then be analysed using an analytical approach which enables the unhydrolyzed protein solution to be compared with the partially or completely hydrolysed samples. Suitably, the incubation is performed in a dynamic approach over time while controlling conditions of pH, ionic strength and temperature. Interim samples are collected at time 0, timepoint N, timepoint N+1 and so on. The enzyme in the samples is then immediately inactivated by adding a chymosin enzyme inhibitor to quench the enzyme activity. Samples are then analysed using an analytical approach which enables the unhydrolyzed protein solution to be compared with the partially or completely hydrolysed samples.

Suitable analytical approaches include HPLC, mass spectrometry and gel electrophoresis.

In some embodiments, the chymosin shows less than about 15% (suitably, less than about 12%, less than about 10%, less than about 8%, less than about 6%, less than about 5%) reduction in β-casein amount (w/w of total protein) following treatment of a β-casein substrate for 24 hours at 5°C with the chymosin as compared to the β-casein amount of the untreated β-casein substrate. Thus, following treatment of a β-casein substrate for 24 hours at 5°C with the chymosin, at least about 85% (suitably, at least about 88%, at least about 90%, at least about 92%, at least about 94%, at least about 96%) of the β-casein (w/w of total protein) remains unhydrolysed. The β-casein substrate may be any substrate containing β-casein, for example a permeate obtained in step b) of the method of the invention. Suitably, the hydrolysis of β-casein may be determined by any suitable method known in the art. Suitably, the method described herein may be used (see Examples).

In some embodiments, the chymosin shows at least about 90% (suitably, at least about 91%, at least about 92%, at least about 93%, at least about 94%, at least about 95%, at least about 96%, at least about 97%, at least about 98%, at least about 98.5%, at least about 99%, or at least about 99.5%) reduction in κ-casein amount (w/w of total protein) following treatment of a β-casein substrate for 24 hours at 5°C with the chymosin as compared to the β-casein amount of the untreated β-casein substrate. Thus, following treatment of a β-casein substrate for 24 hours at 5°C with the chymosin, at least about 90% (suitably, at least about 91%, at least about 92%, at least about 93%, at least about 94%, at least about 95%, at least about 96%, at least about 97%, at least about 98%, at least about 98.5%, at least about 99%, or at least about 99.5%) of the κ-casein (w/w of total protein) is hydrolysed. Suitably, following treatment of a β-casein substrate for 24 hours at 5°C with the chymosin, less than about 9 %, 8 %, 7 %, 6 %, 5 %, 4 %, 3 %, 2 %, 1.5 %, 1% or 0.5 % (w/w of total protein) of the κ-casein remains unhydrolyzed . Suitably, the hydrolysis of κ-casein may be determined by any suitable method known in the art. Suitably, the method described herein may be used (see Examples).

In some embodiments, the chymosin shows less than about 15% (suitably, less than about 12%, less than about 10%, less than about 8%, less than about 6%, less than about 5%) reduction in β-casein amount (w/w of total protein) and at least about 90% (suitably, at least about 91%, at least about 92%, at least about 93%, at least about 94%, at least about 95%, at least about 96%, at least about 97%, at least about 98%, at least about 98.5%, at least about 99%, or at least about 99.5%) reduction in κ-casein amount (w/w of total protein) following treatment of a β-casein substrate for 24 hours at 5°C with the chymosin as compared to the β-casein amount of the untreated β-casein substrate. Thus, following treatment of a β-casein substrate for 24 hours at 5°C with the chymosin, at least about 85% (suitably, at least about 88%, at least about 90%, at least about 92%, at least about 94%, at least about 96%) of the β-casein (w/w of total protein) remains unhydrolysed and at least about 90% (suitably, at least about 91%, at least about 92%, at least about 93%, at least about 94%, at least about 95%, at least about 96%, at least about 97%, at least about 98%, at least about 98.5%, at least about 99%, or at least about 99.5%) of the κ-casein (w/w of total protein) is hydrolysed.The activity of chymosin may be determined using any suitable method known in the art. Suitably, the activity of a candidate chymosin may be determined using the method described by Hurley et al. (Hurley et al., International Dairy Journal, 1999, 9: 553-558). Suitably, the activity of a candidate chymosin may be determined using the method described herein (see Examples).

In some embodiments, the membrane filtration is performed using a polymeric microfiltration membrane or a ceramic microfiltration membrane. Any suitable polymeric microfiltration membranes and ceramic microfiltration membrane known in the art may be used in the practice of the present invention (see, for example, Crowley et al., International Dairy Journal, 2015, 48: 23-30; and Zulewska et al., J. Dairy Sci.,2018, 101: 10831-10843).

Suitably, the polymeric microfiltration membrane could be made out of various polymers that are used for separations, including polyether sulfone (PES), polyvinylidene fluoride (PVDF), charged PVDF nylon, polytetrafluoroethylene (PTFE), polypropylene, regenerated cellulose, cellulose acetate, polysulfone, polyamide, or any mixture of the above polymers.

In some embodiments, the polymeric microfiltration membrane comprises PES or PVDF.

Suitably, the pore size of the microfiltration membrane is from about 0.1 μm to about 2.0 μm m, such as from about 0.4 μm to about 1.0 μm. Preferably, the pore size is about 0.1 μm. For example, PVDF-based membranes of 0.5 μm nominal pore diameter, useful for practicing the invention, are available from PTI Advanced Filtration (Oxnard, California) under the name "F-Series Microfiltration Sanitary Spiral Elements".

The same type of membrane may be used for all filtration steps or different membranes may be used for each filtration step.

As discussed above, the present invention provides the advantage that a highly pure β-casein ingredient can be manufactured by microfiltration without co-enrichment of other milk proteins, including κ-casein and casein macropeptide, by using chymosin during the process to produce the β-casein ingredient. The resulting β-casein ingredient may have a high purity (for example, of at least about 90% w/w total protein).

In some embodiments, the permeate enriched in β-casein obtained in step b) or the chymosin-treated permeate enriched in β-casein obtained after step b) comprises reduced levels of contaminants compared to a permeate produced by a method which does not involve the chymosin treatment step of the present invention. Suitably, the contaminants are other milk proteins, such as κ-casein and casein macropeptide.

In some embodiments, the permeate enriched in β-casein obtained in step b) comprises κ-casein in an amount of less than about 10 % (w/w of total protein). Suitably, the permeate enriched in β-casein obtained in step b) comprises κ-casein in an amount of less than about 9 %, 8 %, 7 %, 6 %, 5 %, 4 %, 3 %, 2 %, 1.5 %, 1% or 0.5 % (w/w of total protein). Preferably, the permeate enriched in β-casein obtained in step b) comprises κ-casein in an amount of less than about 8 % (w/w of total protein). More preferably, the permeate enriched in β-casein obtained in step b) comprises κ-casein in an amount of less than about 1.5 % (w/w of total protein), suitably of less than about 1 % or less than about 0.5 % (w/w of total protein). In a preferred embodiment, the permeate enriched in β-casein obtained in step b) comprises κ-casein in an amount of less than about 0.5% (w/w of total protein). Suitably, the permeate enriched in β-casein obtained in step b) comprises κ-casein in an amount of less than about 0.4%, about 0.3% or about 0.2% (w/w of total protein). In some particularly preferred embodiments, the permeate enriched in β-casein obtained in step b) comprises undetectable levels of κ-casein.

In some embodiments, the chymosin-treated permeate enriched in β-casein obtained after step b) comprises κ-casein in an amount of less than about 10 % (w/w of total protein). Suitably, the chymosin-treated permeate enriched in β-casein obtained after step b) comprises κ-casein in an amount of less than about 9 %, 8 %, 7 %, 6 %, 5 %, 4 %, 3 %, 2 %, 1.5 %, 1 % or 0.5 % (w/w of total protein). Preferably, the chymosin-treated permeate enriched in β-casein obtained after step b) comprises κ-casein in an amount of less than about 8 % (w/w of total protein). More preferably, the chymosin-treated permeate enriched in β-casein obtained after step b) comprises κ-casein in an amount of less than about 1.5 % (w/w of total protein), suitably of less than about 1 % or less than about 0.5 % (w/w of total protein). In a preferred embodiment, the chymosin-treated permeate enriched in β-casein obtained after step b) comprises κ-casein in an amount of less than about 0.5% (w/w of total protein). Suitably, the chymosin-treated permeate enriched in β-casein obtained after step b) comprises κ-casein in an amount of less than about 0.4%, about 0.3% or about 0.2% (w/w of total protein). In some particularly preferred embodiments, the chymosin-treated permeate enriched in β-casein obtained after step b) comprises undetectable levels of κ-casein.

The ratio of β-casein:k-casein in the β-casein ingredient obtained by the method of the invention is purity-dependent. Thus, the ratio of β-casein:k-casein in the permeate enriched in β-casein obtained in step b) or the chymosin-treated permeate enriched in β-casein obtained after step b) varies according to the purity of β-casein in the permeate or chymosin-treated permeate.

In some embodiments, for a purity of β-casein in the permeate or chymosin-treated permeate of about 90% w/w total protein, the ratio of β-casein:k-casein is from100:0 to about 90:10. For example, for a purity of β-casein in the permeate or chymosin-treated permeate of about 90% w/w total protein, the ratio of β-casein:k-casein may be about 90:10, 90:8, 90:6, 90:4, 90:2, 92:8, 92:6, 92:4, 92:2, 94:6, 94:4, 94:2, 96:4, 96:2, 98:2, or 100:0.

Protein levels, such as levels of β-casein and/or κ-casein, may be determined using any suitable method known in the art. For example, protein levels may be determined using the Bradford protein assay, mass spectrometry, high pressure liquid chromatography and other techniques that are known in the art for quantification of peptides. Suitably, protein levels may be determined using the methods described herein (see Examples).

In some embodiments, step b) is repeated multiple times and the resulting permeates enriched in β-casein are combined.

Improved purification of β-casein may be accomplished by demineralization of the permeate. The demineralization step reduces the amount of solids in the composite permeate, yielding further purification and enrichment of β-casein.

In some embodiments, the method further comprises one or more of the following steps:

demineralizing the permeate enriched in β-casein obtained in step b) or the chymosin-treated permeate enriched in β-casein obtained after step b);

drying the permeate enriched in β-casein obtained in step b) or the chymosin-treated permeate enriched in β-casein obtained after step b);

concentrating the permeate enriched in β-casein obtained in step b) or the chymosin-treated permeate enriched in β-casein obtained after step b); and/or

sterilising the permeate enriched in β-casein obtained in step b) or the chymosin-treated permeate enriched in β-casein obtained after step b).

The permeate may be demineralised (e.g. using diafiltration), dried (e.g. freeze-dried, spray-dried), concentrated or sterilised using any suitable technique known in the art.

In some embodiments, the milk protein source is any mammalian milk, mammalian milk concentrate of mammalian milk isolate. The milk may be obtained from cows, sheep, goats, buffaloes or camels. In some embodiments, the milk protein source is selected from skim milk, whole milk, buttermilk, milk protein concentrate, milk protein isolate, β-casein concentrate, β-casein isolate, micellar casein isolate and micellar casein concentrate.

There are two forms of β-casein, namely A1 and A2, which differ by only one of the amino acids in the β-casein amino acid sequence. Some research has indicated that the digestibility of dairy products is improved with A2 β-casein as compared to A1 β-casein. Furthermore, the β-casein fraction in human milk is primarily the A2 genotype. Therefore, it may be desirable to use the A2 β-casein form for certain applications such as nutritional compositions to improve digestibility and to more closely resemble human milk.

In some embodiments, the β-casein is of any form. In one embodiment, the β-casein is A1 β-casein. In a preferred embodiment, the β-casein is A2 β-casein.

Suitably, the β-casein may be obtained from a mammal having any β-casein genotype. The animals of any dairy breed can be tested to identify their β-casein genotype. The possible β-casein genotypes are A2A2, A1A2 or A1A1. Suitably, the β-casein may be obtained from a mammal having the A2A2 or A1A2 β-casein genotype. Preferably, the β-casein may be obtained from a mammal having the A2A2 β-casein genotype.

Warm microfiltration steps are typically used in the dairy industry to separate the whey and casein fractions of milk or dairy sources (see, for example, France et al., Foods, 2021, 10(9)). Any suitable warm microfiltration process known in the art for the separation of the whey protein fraction may be employed in the present invention.

The method of the present invention may further comprise the separation of the whey protein fraction by warm microfiltration. The warm microfiltration steps may be performed before or after the cold microfiltration steps. Hence, a source material (which may be any of the milk protein sources described herein) may be pre-treated using warm microfiltration to separate the whey protein fraction prior to the method of the invention, i.e. to form the milk protein source. Alternatively, the permeate or chymosin-treated permeate enriched in β-casein as described herein may be subjected to warm microfiltration to separate the whey protein fraction. This forms a retentate which is further enriched for β-casein.

In some embodiments, the milk protein source has been obtained by:

heating a source material at a temperature sufficient to associate β-casein into micelles;

depleting whey proteins from the source material by membrane filtration at a temperature sufficient to separate the whey protein from the source material to form a retentate enriched in β-casein;

diluting the retentate enriched in β-casein to form the milk protein source.

In some embodiments, the method further comprises the steps of:

heating the permeate enriched in β-casein at a temperature sufficient to re-associate the β-casein into micelles, optionally following the step of treating the permeate enriched in β-casein with chymosin;

depleting whey proteins from the heated permeate enriched in β-casein by membrane filtration at a temperature sufficient to separate the whey protein from the permeate enriched in β-casein to form a retentate enriched in β-casein.

In some embodiments, the method further comprises one or more of the following steps:

demineralizing the retentate enriched in β-casein;

drying the retentate enriched in β-casein;

concentrating retentate enriched in β-casein; and/or

sterilising retentate enriched in β-casein.

Demineralising, drying, concentrating and sterilising the retentate enriched in β-casein may be performed as described herein with respect to the permeate enriched in β-casein obtained in step b) or the chymosin-treated permeate enriched in β-casein obtained after step b).

In some embodiments, the steps of heating the source material or permeate enriched in β-casein and depleting the whey proteins are carried out at a temperature in the range of about 16 °C to about 70 °C. Suitably, the steps are carried out at a temperature in the range of about 20 °C to about 65 °C, such as a temperature in the range of about 30 °C to about 60 °C, such as a temperature in the range of about 45 °C to about 60 °C. Preferably, the steps are carried out at a temperature in the range of about 50 °C to about 55 °C.

In some embodiments, the steps of heating the source material or permeate enriched in β-casein and depleting the whey proteins are carried out at the same temperature.

In alternative embodiments, the steps of heating the source material or permeate enriched in β-casein and depleting the whey proteins are carried out at different temperatures.

In some embodiments, the step of heating the source material or permeate enriched in β-casein is performed for about 6 to about 48 hours. Suitably, the step of heating the source material or permeate enriched in β-casein is performed for about 12 to about 36 hours, such as for about 18 hours to about 24 hours. Suitably, the step of heating the source material or permeate enriched in β-casein is performed for about 18 hours.

In some embodiments, the step of depleting the whey proteins is performed for about 6 to about 48 hours. Suitably, the step of depleting the whey proteins is performed for about 12 to about 36 hours, such as for about 18 hours to about 24 hours. Suitably, the step of depleting the whey proteins is performed for about 18 hours.

The retentate enriched in β-casein may comprise the same amounts of κ-casein or the same purity-dependent ratio of β-casein: κ-casein as described herein with respect to the permeate enriched in β-casein obtained in step b) or the chymosin-treated permeate enriched in β-casein obtained after step b).

In a further aspect, the invention provides a β-casein enriched product obtained by the method of the invention.

In a further aspect, the invention provides a β-casein enriched product comprising κ-casein in an amount of less than about 10 % (w/w of total protein). Suitably, the β-casein enriched product comprises κ-casein in an amount of less than about 9 %, 8 %, 7 %, 6 %, 5 %, 4 %, 3 %, 2 %, 1.5 %, 1 % or 0.5 % (w/w of total protein). Preferably, the β-casein enriched product comprises κ-casein in an amount of less than about 8 % (w/w of total protein). More preferably, the β-casein enriched product comprises κ-casein in an amount of less than about 1.5 % (w/w of total protein), suitably of less than about 1 % or less than about 0.5 % (w/w of total protein). In a preferred embodiment, the invention provides a β-casein enriched product comprising κ-casein in an amount of less than about 0.5% (w/w of total protein). Suitably, the invention provides a β-casein enriched product comprising κ-casein in an amount of less than about 0.4%, about 0.3% or about 0.2% (w/w of total protein). In some particularly preferred embodiments, the β-casein enriched product comprises undetectable levels of κ-casein.

In some embodiments, for a purity of β-casein in the β-casein enriched product of about 90% w/w total protein, the ratio of β-casein:κ-casein is from100:0 to about 90:10. For example, for a purity of β-casein in the permeate or chymosin-treated permeate of about 90% w/w total protein, the ratio of β-casein:κ-casein may be about 90:10, 90:8, 90:6, 90:4, 90:2, 92:8, 92:6, 92:4, 92:2, 94:6, 94:4, 94:2, 96:4, 96:2, 98:2, or 100:0.

**Nutritional composition**

In a further aspect, the invention provides a nutritional composition comprising the β-casein enriched product described herein.

The nutritional composition according to the present invention may also comprise oligosaccharide(s) and/or a fiber(s) and/or a precursor(s) thereof. The oligosaccharide and/or fiber and/or precursor thereof may be selected from the list comprising human milk oligosaccharides (HMOs), fructo-oligosaccharides (FOS), inulin, xylooligosaccharides (XOS), cello-oligosaccharides (COS), β-glucan, polydextrose and any combination thereof. They may be in an amount between 0 and 10% by weight of composition. In a particular embodiment, the nutritional composition or the growing-up milk can also contain at least one BMO (bovine milk oligosaccharide).

HMOs which may be included in the combination or nutritional composition according to the present invention may be selected from the group consisting of 2-FL (2- fucosyllactose), 3-FL (3- fucosyllactose), Lacto-difucotetraose (LDFT)), lacto-N- fucopentaose (e.g. lacto-N-fucopentaose I, lacto-N-fucopentaose II, lacto-N- fucopentaose III, lacto-N-fucopentaose V), lacto-N-fucohexaose, lacto-N-difucohexaose I, fucosyllacto-N-hexaose, fucosyllacto-N-neohexaose, difucosyllacto-N-hexaose I, difucosyllacto-N-neohexaose II, para-lacto-N-neohexaose (para-LNnH), LNT (lacto-N-tetraose), LNnT (lacto-N-neotetraose), lacto-N-hexaose, lacto- N-neohexaose, para-lacto-N-hexaose, para-lacto-N-neohexaose, lacto-N-octaose, lacto-N- neooctaose, iso- lacto-N-octaose, para- lacto-N-octaose, lacto-N-decaose, 3-SL (3' sialyllactose) , 6-SL (6' sialyllactose) and any combination thereof.

In some embodiments, the combination or nutritional composition according to the invention comprises at least one additional HMO. In other embodiments, the combination or nutritional composition according to the present invention is devoid of any further HMOs.

The nutritional composition of the present invention can further comprise at least one probiotic (or probiotic strain), such as at least one probiotic bacterial strain.

The probiotic microorganisms most commonly used are principally bacteria and yeasts of the following genera: *Lactobacillus spp., Streptococcus spp., Enterococcus spp., Bifidobacterium spp.* and *Saccharomyces spp.*

In some particular embodiments, the probiotic is a probiotic bacterial strain. In some specific embodiments, it is particularly *Bifidobacteria* and/or *Lactobacilli.*

Suitable probiotic bacterial strains include *Lactobacillus paracasei* CNCM I-2116, *Lactobacillus johnsonii* CNCM I-1225, *Streptococcus salivarius* DSM 13084 sold by BLIS Technologies Limited of New Zealand under the designation KI2, *Bifidobacterium lactis* CNCM 1-3446 sold *inter alia* by the Christian Hansen company of Denmark under the trademark Bb 12, *B. longum* CNCM I-2618 (8, *longum* NCC2705), *Bifidobacterium breve* sold by Danisco under the trademark Bb-03, *Bifidobacterium breve* sold by Morinaga under the trade mark M-16V, *Bifidobacterium infantis* sold for example by Procter & Gamble Co. under the trademark Bifantis and *Bifidobacterium breve* sold by Institut Rosell (Lallemand) under the trademark R0070.

The nutritional composition according to the invention may contain from 10e3 to 10e12 cfu of the at least one further probiotic strain, more preferably between 10e7 and 10e12 cfu such as between 10e8 and 10e10 cfu of probiotic strain per g of composition on a dry weight basis.

In one embodiment the probiotics are viable. In another embodiment the probiotics are nonreplicating or inactivated. There may be both viable probiotics and inactivated probiotics in some other embodiments. Probiotic components and metabolites can also be added.

The nutritional composition according to the invention can be for example an infant formula, a starter infant formula, a follow-on or follow-up formula, a growing-up milk, a baby food, an infant cereal composition, a fortifier such as a human milk fortifier, or a supplement. In some particular embodiments, the composition of the invention is an infant formula, a fortifier or a supplement that may be intended for the first 4 or 6 months of age. In a preferred embodiment the nutritional composition of the invention is an infant formula.

In some other embodiments the nutritional composition of the present invention is a fortifier. The fortifier can be a breast milk fortifier (e.g. a human milk fortifier) or a formula fortifier such as an infant formula fortifier or a follow-on/follow-up formula fortifier.

When the nutritional composition is a supplement, it can be provided in the form of unit doses. In such cases it is particularly useful to define the amount of oligosaccharides and probiotics in terms of daily dose to be administered to the infant, young child or child, such as described above.

The nutritional composition of the present invention can be in solid (e.g. powder), liquid or gelatinous form. In a specific embodiment the nutritional composition is a supplement, wherein the supplement is in powder form and provided in a sachet, preferably a sachet with 0.1 to 20 g per sachet, for example 1 to 10 g per sachet, or in the form of a syrup, preferably a syrup with a total solid concentration of 5 to 75 g/100 mL (5 to 75% (w/v)). When the supplement is in powder form, it may comprise a carrier. It is however preferred that the supplement is devoid of a carrier. When the supplement is in the form of a syrup, the components are preferably dissolved or suspended in water acidified with citrate.

The nutritional composition according to the invention generally contains a protein source. The protein can be in an amount of from 1.6 to 3 g per 100 kcal. In some embodiments, especially when the composition is intended for premature infants, the protein amount can be between 2.4 and 4 g/100kcal or more than 3.6 g/100kcal. In some other embodiments the protein amount can be below 2.0 g per 100 kcal, e.g. between 1.8 to 2 g/100 kcal, or in an amount below 1.8 g per 100 kcal.

Protein sources based on whey, casein and mixtures thereof may be used as well as protein sources based on soy. As far as whey proteins are concerned, the protein source may be based on acid whey or sweet whey or mixtures thereof and may include alpha-lactalbumin and beta-lactoglobulin in any desired proportions. As far as casein proteins are concerned, the protein source may be based upon the β-casein enriched product described herein.

In some advantageous embodiments the protein source is whey predominant (i.e. more than 50% of proteins are coming from whey proteins, such as 60% or 70%).

The proteins may be intact or hydrolysed or a mixture of intact and hydrolysed proteins. By the term "intact" is meant that the main part of the proteins are intact, i.e. the molecular structure is not altered, for example at least 80% of the proteins are not altered, such as at least 85% of the proteins are not altered, preferably at least 90% of the proteins are not altered, even more preferably at least 95% of the proteins are not altered, such as at least 98% of the proteins are not altered. In a particular embodiment, 100% of the proteins are not altered.

The term "hydrolysed" means in the context of the present invention a protein which has been hydrolysed or broken down into its component amino acids. The proteins may be either fully or partially hydrolysed. It may be desirable to supply partially hydrolysed proteins (degree of hydrolysis between 2 and 20%), for example for infants or young children believed to be at risk of developing cow's milk allergy. If hydrolysed proteins are required, the hydrolysis process may be carried out as desired and as is known in the art. For example, whey protein hydrolysates may be prepared by enzymatically hydrolysing the whey fraction in one or more steps. If the whey fraction used as the starting material is substantially lactose free, it is found that the protein suffers much less lysine blockage during the hydrolysis process. This enables the extent of lysine blockage to be reduced from about 15% by weight of total lysine to less than about 10% by weight of lysine; for example about 7% by weight of lysine which greatly improves the nutritional quality of the protein source.

In an embodiment of the invention at least 70% of the proteins are hydrolysed, preferably at least 80% of the proteins are hydrolysed, such as at least 85% of the proteins are hydrolysed, even more preferably at least 90% of the proteins are hydrolysed, such as at least 95% of the proteins are hydrolysed, particularly at least 98% of the proteins are hydrolysed. In a particular embodiment, 100% of the proteins are hydrolysed.

In one particular embodiment the proteins of the nutritional composition are hydrolyzed, fully hydrolyzed or partially hydrolyzed. The degree of hydrolysis (DH) of the protein can be between 8 and 40, or between 20 and 60 or between 20 and 80 or more than 10, 20, 40, 60, 80 or 90.

The protein component can alternatively be replaced by a mixture or synthetic amino acid, for example for preterm or low birth weight infants.

In a particular embodiment the nutritional composition or the growing-up milk according to the invention is a hypoallergenic composition. In another particular embodiment the composition according to the invention is a hypoallergenic nutritional composition or growing-up milk.

The nutritional composition according to the present invention generally contains a carbohydrate source. This is particularly preferable in the case where the nutritional composition of the invention is an infant formula. In this case, any carbohydrate source conventionally found in infant formulae such as lactose, sucrose, saccharose, maltodextrin, starch and mixtures thereof may be used although one of the preferred sources of carbohydrates is lactose.

The nutritional composition according to the present invention generally contains a source of lipids. This is particularly relevant if the nutritional composition of the invention is an infant formula. In this case, the lipid source may be any lipid or fat which is suitable for use in infant formulae. Some suitable fat sources include palm oil, structured triglyceride oil, high oleic sunflower oil and high oleic safflower oil, medium-chain-triglyceride oil. The essential fatty acids linoleic and α-linolenic acid may also be added, as well small amounts of oils containing high quantities of preformed arachidonic acid and docosahexaenoic acid such as fish oils or microbial oils. The fat source may have a ratio of n-6 to n-3 fatty acids of about 5:1 to about 15:1; for example about 8:1 to about 10:1.

The nutritional composition of the invention may also contain all vitamins and minerals understood to be essential in the daily diet and in nutritionally significant amounts. Minimum requirements have been established for certain vitamins and minerals. Examples of minerals, vitamins and other nutrients optionally present in the composition of the invention include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chlorine, potassium, sodium, selenium, chromium, molybdenum, taurine, and L-carnitine. Minerals are usually added in salt form. The presence and amounts of specific minerals and other vitamins will vary depending on the intended population.

If necessary, the nutritional composition of the invention may contain emulsifiers and stabilisers such as soy, lecithin, citric acid esters of mono- and diglycerides, and the like.

The nutritional composition of the invention may also contain other substances which may have a beneficial effect such as lactoferrin, nucleotides, nucleosides, and the like.

The nutritional composition of the invention may also contain carotenoid(s). In some particular embodiments of the invention, the nutritional composition of the invention does not comprise any carotenoid.

The nutritional composition according to the invention may be prepared in any suitable manner. A composition will now be described by way of example.

For example, a formula such as an infant formula may be prepared by blending together the protein source, the carbohydrate source and the fat source in appropriate proportions. If used, the emulsifiers may be included at this point. The vitamins and minerals may be added at this point but they are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently in the range between about 50°C and about 80°C to aid dispersal of the ingredients. Commercially available liquefiers may be used to form the liquid mixture.

The oligosaccharide(s) may be added at this stage, especially if the final product is to have a liquid form. If the final product is to be a powder, they may likewise be added at this stage if desired.

The liquid mixture is then homogenised, for example in two stages.

The liquid mixture may then be thermally treated to reduce bacterial loads, by rapidly heating the liquid mixture to a temperature in the range between about 80°C and about 150°C for a duration between about 5 seconds and about 5 minutes, for example. This may be carried out by means of steam injection, an autoclave or a heat exchanger, for example a plate heat exchanger.

Then, the liquid mixture may be cooled to between about 60°C and about 85°C for example by flash cooling. The liquid mixture may then be again homogenised, for example in two stages between about 10 MPa and about 30 MPa in the first stage and between about 2 MPa and about 10 MPa in the second stage. The homogenised mixture may then be further cooled to add any heat sensitive components, such as vitamins and minerals. The pH and solids content of the homogenised mixture are conveniently adjusted at this point.

If the final product is to be a powder, the homogenised mixture is transferred to a suitable drying apparatus such as a spray dryer or freeze dryer and converted to powder. The powder should have a moisture content of less than about 5% by weight. The oligosaccharide(s) may also or alternatively be added at this stage by dry-mixing or by blending them in a syrup form of crystals, along with the probiotic strain(s), and the mixture is spray-dried or freeze-dried.

If a liquid composition is preferred, the homogenised mixture may be sterilised then aseptically filled into suitable containers or may be first filled into the containers and then retorted.

In another embodiment, the composition of the invention may be a supplement. The supplement may be in the form of tablets, capsules, pastilles or a liquid for example. The supplement may further contain protective hydrocolloids (such as gums, proteins, modified starches), binders, film forming agents, encapsulating agents/materials, wall/shell materials, matrix compounds, coatings, emulsifiers, surface active agents, solubilizing agents (oils, fats, waxes, lecithins etc.), adsorbents, carriers, fillers, co-compounds, dispersing agents, wetting agents, processing aids (solvents), flowing agents, taste masking agents, weighting agents, jellifying agents and gel forming agents. The supplement may also contain conventional pharmaceutical additives and adjuvants, excipients and diluents, including, but not limited to, water, gelatine of any origin, vegetable gums, lignin-sulfonate, talc, sugars, starch, gum arabic, vegetable oils, polyalkylene glycols, flavouring agents, preservatives, stabilizers, emulsifying agents, buffers, lubricants, colorants, wetting agents, fillers, and the like.

Further, the supplement may contain an organic or inorganic carrier material suitable for oral or parenteral administration as well as vitamins, minerals trace elements and other micronutrients in accordance with the recommendations of Government bodies such as the USRDA.

**Cheesemaking**

In the methods of the invention, the retentate obtained by the cold microfiltration step b) and the permeate obtained by the warm microfiltration step comprise milk protein concentrate, such as the whey protein fraction of the milk protein source, depleted in β-casein. Thus, this retentate obtained by the cold microfiltration step b) or this permeate obtained by the warm microfiltration step may be readily used for cheesemaking, either directly (as cheesemilk), or may be added to cheesemilk to enrich and standardize the protein content of cheesemilk. Partial β-casein depleted milk was used for the production of cheese (e.g., fresh cheese) with increased melting ability and reduced bitterness in flavour, since the β-casein peptides are suggested to be primarily responsible for the bitter flavour (Schaefer et al., DMW Die Milchwirtschaft, 2015, 20:722-726; O'Mahony et al., Milchwissenschaft, 2008, 63: 145-148; Schäfer et al., International Dairy Journal, 2019, 93: 72-80). Hence, cheese manufactured using the retentate obtained by the cold microfiltration step b) and the permeate obtained by the warm microfiltration step of the present invention would be expected to possess the same improved properties of increased melting ability and reduced bitterness in flavour.

Accordingly, in a further aspect, the present invention provides the use of the retentate obtained by the cold microfiltration step b) or the permeate obtained by the warm microfiltration steps described herein for cheesemaking.

In a further aspect, the present invention provides a method for making cheese, the method comprising the steps:

a') pre-treating a milk protein source with chymosin;

a) cooling the chymosin-treated milk protein source to a temperature sufficient to release β-casein from the micelles containing β-casein;

b) separating β-casein from the cooled milk protein source by membrane filtration to form a retentate depleted in β-casein; and

c) using the retentate depleted in β-casein to make cheese.

In a further aspect, the present invention provides a method for making cheese, the method comprising the steps:

a') pre-treating a milk protein source with chymosin;

a) cooling the milk protein source to a temperature sufficient to release β-casein from the micelles containing β-casein;

b) separating β-casein from the cooled milk protein source by membrane filtration to form a permeate enriched in β-casein;

c) heating the permeate enriched in β-casein at a temperature sufficient to re-associate the β-casein into micelles;

d) depleting whey proteins from the heated permeate enriched in β-casein by membrane filtration at a temperature sufficient to separate the whey protein from the permeate enriched in β-casein to form a permeate depleted in β-casein; and

e) using the permeate depleted in β-casein to make cheese.

Suitably, the retentate obtained by the cold microfiltration step b) or the permeate obtained by the warm microfiltration step d) may be used directly as cheesemilk or may be added to cheesemilk.

Any known method for the manufacture of cheese may be employed in the methods of the invention (see, for example, Schaefer et al., DMW Die Milchwirtschaft, 2015, 20:722-726; O'Mahony et al., Milchwissenschaft, 2008, 63: 145-148; Schäfer et al., International Dairy Journal, 2019, 93: 72-80; Tamime (Editor), Membrane Processing: Dairy and Beverage Applications (Society of Dairy Technology), first edition 2013, Wiley-Blackwell).

The description and embodiments above with respect to the method for obtaining β-casein described herein apply equally to the uses and methods for making cheese described herein.

**Variants, derivatives, analogues, and fragments**

In addition to the specific polypeptides mentioned herein, the invention also encompasses variants, derivatives, and fragments thereof.

In the context of the invention, a "variant" of any given sequence is a sequence in which the specific sequence of residues (whether amino acid or nucleic acid residues) has been modified in such a manner that the polypeptide in question retains at least one or all of its endogenous functions. A variant sequence can be obtained by addition, deletion, substitution, modification, replacement and/or variation of at least one residue present in the naturally occurring polypeptide.

The term "derivative" as used herein in relation to proteins or polypeptides of the invention includes any substitution of, variation of, modification of, replacement of, deletion of and/or addition of one (or more) amino acid residues from or to the sequence, providing that the resultant protein or polypeptide retains at least one or all of its endogenous functions.

Typically, amino acid substitutions may be made, for example from 1, 2 or 3, to 10 or 20 substitutions, provided that the modified sequence retains the required activity or ability. Amino acid substitutions may include the use of non-naturally occurring analogues.

Polypeptides used in the invention may also have deletions, insertions or substitutions of amino acid residues which produce a silent change and result in a functionally equivalent polypeptide. Deliberate amino acid substitutions may be made on the basis of similarity in polarity, charge, solubility, hydrophobicity, hydrophilicity and/or the amphipathic nature of the residues as long as the endogenous function is retained. For example, negatively charged amino acids include aspartic acid and glutamic acid; positively charged amino acids include lysine and arginine; and amino acids with uncharged polar head groups having similar hydrophilicity values include asparagine, glutamine, serine, threonine and tyrosine.

Conservative substitutions may be made, for example according to the table below. Amino acids in the same block in the second column and in the same line in the third column may be substituted for each other:

| ALIPHATIC | Non-polar | GAP |
| | | I L V |
| | Polar - uncharged | C S T M |
| | | N Q |
| | Polar - charged | D E |
| | | K R H |
| AROMATIC | | F W Y |

The effect of additions, deletions, substitutions, modifications, replacements and/or variations may be predicted using any suitable prediction tool e.g. SIFT (Vaser, R., et al., 2016. Nature protocols, 11(1), pp.1-9), PolyPhen-2 (Adzhubei, I., et al., 2013. Current protocols in human genetics, 76(1), pp.7-20), CADD (Rentzsch, P., et al., 2021. Genome medicine, 13(1), pp.1-12), REVEL (Ioannidis, N.M., et al., 2016. The American Journal of Human Genetics, 99(4), pp.877-885), MetaLR (Dong, C., et al., 2015. Human molecular genetics, 24(8), pp.2125-2137), and/or MutationAssessor (Reva, B., et al., 2011. Nucleic acids research, 39(17), pp.e118-e118) or based on clinical data e.g. ClinVar (Landrum, M.J., et al., 2016. Nucleic acids research, 44(D1), pp.D862-D868). Suitable additions, deletions, substitutions, modifications, replacements and/or variations may be considered tolerated, benign, and/or likely benign.

Typically, a variant may have a certain identity with the wild type amino acid sequence.

In the present context, a variant sequence is taken to include an amino acid sequence which may be at least 50%, at least 55%, at least 60%, at least 65%, at least 70%, at least 75%, at least 80%, at least 85% or at least 90% identical, suitably at least 95%, at least 96%, at least 97%, at least 98% or at least 99% identical to the subject sequence. Although a variant can also be considered in terms of similarity (i.e. amino acid residues having similar chemical properties/functions), in the context of the present invention it is preferred to express in terms of sequence identity.

In the present context, a variant sequence is taken to include a nucleotide sequence which may be at least 50%, at least 55%, at least 60%, at least 65%, at least 70%, at least 75%, at least 80%, at least 85% or at least 90% identical, suitably at least 95%, at least 96%, at least 97%, at least 98% or at least 99% identical to the subject sequence. Although a variant can also be considered in terms of similarity, in the context of the present invention it is preferred to express it in terms of sequence identity.

Suitably, reference to a sequence which has a percent identity to any one of the SEQ ID NOs detailed herein refers to a sequence which has the stated percent identity over the entire length of the SEQ ID NO referred to.

Sequence identity comparisons can be conducted by eye, or more usually, with the aid of readily available sequence comparison programs. These commercially available computer programs can calculate percent identity between two or more sequences.

Percent identity may be calculated over contiguous sequences, i.e. one sequence is aligned with the other sequence and each amino acid or nucleotide in one sequence is directly compared with the corresponding amino acid or nucleotide in the other sequence, one residue at a time. This is called an "ungapped" alignment. Typically, such ungapped alignments are performed only over a relatively short number of residues.

Although this is a very simple and consistent method, it fails to take into consideration that, for example, in an otherwise identical pair of sequences, one insertion or deletion in the amino acid or nucleotide sequence may cause the following residues or codons to be put out of alignment, thus potentially resulting in a large reduction in percent identity when a global alignment is performed. Consequently, most sequence comparison methods are designed to produce optimal alignments that take into consideration possible insertions and deletions without penalising unduly the overall identity score. This is achieved by inserting "gaps" in the sequence alignment to try to maximise local identity.

However, these more complex methods assign "gap penalties" to each gap that occurs in the alignment so that, for the same number of identical amino acids or nucleotides, a sequence alignment with as few gaps as possible, reflecting higher relatedness between the two compared sequences, will achieve a higher score than one with many gaps. "Affine gap costs" are typically used that charge a relatively high cost for the existence of a gap and a smaller penalty for each subsequent residue in the gap. This is the most commonly used gap scoring system. High gap penalties will produce optimised alignments with fewer gaps. Most alignment programs allow the gap penalties to be modified. However, it is preferred to use the default values when using such software for sequence comparisons. For example when using the GCG Wisconsin Bestfit package the default gap penalty for amino acid sequences is -12 for a gap and -4 for each extension.

Calculation of maximum percent identity therefore firstly requires the production of an optimal alignment, taking into consideration gap penalties. A suitable computer program for carrying out such an alignment is the GCG Wisconsin Bestfit package (see e.g. Devereux, J., et al., 1984. Nucleic acids research, 12(1), pp.387-395). Examples of other software that can perform sequence comparisons include, but are not limited to, the BLAST package (see e.g. Altschul, S.F., et al., 1990. Journal of molecular biology, 215(3), pp.403-410), BLAST 2 (see e.g. Tatusova, T.A. and Madden, T.L., 1999. FEMS microbiology letters, 174(2), pp.247-250), FASTA (see e.g. Pearson, W.R. and Lipman, D.J., 1988. PNAS, 85(8), pp.2444-2448.), EMBOSS Needle (Madeira, F., et al., 2019. Nucleic acids research, 47(W1), pp.W636-W641) and the GENEWORKS suite of comparison tools. For some applications, it is preferred to use EMBOSS Needle.

Although the final percent identity can be measured, the alignment process itself is typically not based on an all-or-nothing pair comparison. Instead, a scaled similarity score matrix is generally used that assigns scores to each pairwise comparison based on chemical similarity or evolutionary distance. An example of such a matrix commonly used is the BLOSUM62 matrix.

Once the software has produced an optimal alignment, it is possible to calculate percent sequence identity. The software typically does this as part of the sequence comparison and generates a numerical result. The percent sequence identity may be calculated as the number of identical residues as a percentage of the total residues in the SEQ ID NO referred to.

"Fragments" are also variants and the term typically refers to a selected region of the polypeptide or polynucleotide that is of interest either functionally or, for example, in an assay. "Fragment" thus refers to an amino acid or nucleic acid sequence that is a portion of a fulllength polypeptide or polynucleotide.

Such variants, derivatives, and fragments may be prepared using standard recombinant DNA techniques such as site-directed mutagenesis. Where insertions are to be made, synthetic DNA encoding the insertion together with 5' and 3' flanking regions corresponding to the naturally-occurring sequence either side of the insertion site may be made. The flanking regions will contain convenient restriction sites corresponding to sites in the naturally-occurring sequence so that the sequence may be cut with the appropriate enzyme(s) and the synthetic DNA ligated into the cut. The DNA is then expressed in accordance with the invention to make the encoded polypeptide. These methods are only illustrative of the numerous standard techniques known in the art for manipulation of DNA sequences and other known techniques may also be used.

This disclosure is not limited by the exemplary methods and materials disclosed herein, and any methods and materials similar or equivalent to those described herein can be used in the practice or testing of embodiments of this disclosure. Numeric ranges are inclusive of the numbers defining the range. Unless otherwise indicated, any nucleic acid sequences are written left to right in 5' to 3' orientation; amino acid sequences are written left to right in amino to carboxy orientation, respectively.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise.

The terms "comprising", "comprises" and "comprised of as used herein are synonymous with "including", "includes" or "containing", "contains", and are inclusive or open-ended and do not exclude additional, non-recited members, elements or method steps. The terms "comprising", "comprises" and "comprised of also include the term "consisting of.

The publications discussed herein are provided solely for their disclosure prior to the filing date of the present application. Nothing herein is to be construed as an admission that such publications constitute prior art to the claims appended hereto.

Preferred embodiments of the invention will now by described by way of the following numbered paragraphs (paras):

1. A method for obtaining β-casein from a milk protein source, the method comprising the steps:

a) cooling the milk protein source to a temperature sufficient to release β-casein from the micelles containing β-casein; and

b) separating β-casein from the cooled milk protein source by membrane filtration to form a permeate enriched in β-casein; and

wherein the method further comprises:

pre-treating the milk protein source with chymosin before and/or during step a); and/or

treating the permeate enriched in β-casein with chymosin after step b).

2. The method of para 1, wherein steps a) and b) are carried out at a temperature of less than about 15 °C.

3. The method of para 2, wherein steps a) and b) are performed at a temperature in the range of from about 2 °C to about 10 °C.

4. The method of any one of the preceding paras, wherein step a) is performed for about 6 to about 48 hours.

5. The method of any one of the preceding paras, wherein pre-treating the milk protein source with chymosin and/or treating the permeate enriched in β-casein with chymosin is performed at a temperature in the range of from about 2 °C to about 10 °C.

6. The method of any one of the preceding paras, wherein pre-treating the milk protein source with chymosin and/or treating the permeate enriched in β-casein with chymosin is performed for about 6 to about 48 hours.

7. The method of any one of the preceding paras, wherein the membrane filtration is performed using a polymeric microfiltration membrane or a ceramic microfiltration membrane.

8. The method of para 7, wherein the polymeric microfiltration membrane comprises polyether sulfone (PES) or polyvinylidene fluoride (PVDF).

9. The method of any one of the preceding paras, wherein the permeate enriched in β-casein obtained in step b) or the chymosin-treated permeate enriched in β-casein obtained after step b) comprises k-casein in an amount of less than about 8 % (w/w of total protein).

10. The method of any one of the preceding paras, wherein step b) is repeated multiple times and the resulting permeates enriched in β-casein are combined.

11. The method of any one of the preceding paras, wherein the method further comprises the step of demineralizing the permeate enriched in β-casein after step b) or after treating the permeate enriched in β-casein with chymosin.

12. The method according to any one of paras 1-11, wherein the method further comprises one or more of the following steps:

drying the permeate enriched in β-casein obtained in step b) or the chymosin-treated permeate enriched in β-casein obtained after step b);

concentrating the permeate enriched in β-casein obtained in step b) or the chymosin-treated permeate enriched in β-casein obtained after step b); and/or

sterilising the permeate enriched in β-casein obtained in step b) or the chymosin-treated permeate enriched in β-casein obtained after step b).

13. The method of any one of the preceding paras, wherein the milk protein source is selected from skim milk, whole milk, buttermilk, milk protein concentrate, milk protein isolate, β-casein concentrate, β-casein isolate, micellar casein concentrate and micellar casein isolate.

14. The method of any one of the preceding paras, wherein the β-casein is A2 β-casein.

15. The method of any one of the preceding paras, wherein the milk protein source has been obtained by:

heating a source material at a temperature sufficient to associate β-casein into micelles;

depleting whey proteins from the source material by membrane filtration at a temperature sufficient to separate the whey protein from the source material to form a retentate enriched in β-casein;

diluting the retentate enriched in β-casein to form the milk protein source.

16. The method of any one of paras 1-14, wherein the method further comprises the steps of:

heating the permeate enriched in β-casein at a temperature sufficient to re-associate the β-casein into micelles, optionally following the step of treating the permeate enriched in β-casein with chymosin;

depleting whey proteins from the heated permeate enriched in β-casein by membrane filtration at a temperature sufficient to separate the whey protein from the permeate enriched in β-casein to form a retentate enriched in β-casein;

optionally, drying the retentate enriched in β-casein.

17. The method of para 15 or para 16, wherein the steps of heating the source material or permeate enriched in β-casein and depleting the whey proteins are carried out at a temperature in the range of 16 °C to 70 °C.

18. The method of any one of paras 15-17, wherein the retentate enriched in β-casein comprises κ-casein in an amount of less than about 8 % (w/w of total protein).

19. A β-casein enriched product obtained by the method of any one of paras 1-18.

20. A nutritional composition comprising the β-casein enriched product of para 19.

21. The nutritional composition of para 20, wherein the nutritional composition is an infant formula, a starter infant formula, a follow-on or follow-up infant formula, a baby food, an infant cereal composition, a growing-up milk, a fortifier or a supplement.

The invention will now be further described by way of Examples, which are meant to serve to assist one of ordinary skill in the art in carrying out the invention and are not intended in any way to limit the scope of the invention.

EXAMPLES

**Materials & Methods**

*Materials*

Micellar casein concentrate (MCC), with a protein content of 82.7 %(w/w) according to Kjeldahl using the method of IDF (2014), was obtained from Milei (Leutkirch, Germany). Fermentationproduced camel chymosin (ChymaxM200, 200 IMCU/ml (international milk clotting units) was obtained from Chr. Hansen (Chr. Hansen, Denmark). Analytical protein standards ($\kappa$ -, $\alpha_s$- and $\beta$-casein), urea, bis-tris buffer, sodium citrate, dithiothreitol (DTT) acetonitrile and trifluoroacetic acid (TFA), and all other chemicals, unless other specified, were of analytical grade, and purchased from Sigma Aldrich (Wicklow, Ireland).

*Sample preparation and solubility of $\beta$-casein materials*

Prior to all analysis, freeze dried $\beta$-casein-enriched permeates were rehydrated in ultrapure water (18.2 M$\Omega$.cm) at room temperature (~25°C) using magnetic stirring for ~2 h. The samples were heated for 5 min at 70°C to inactivate any residual chymosin and further rehydrated by magnetic stirring overnight (~18 h) at 4°C. pH adjustments were made using 0.1-1 M NaOH/HCl where necessary.

The solubility of the $\beta$-casein materials was determined, rehydrated samples were centrifuged at 3000 x g for 15 min at room temperature using a Sorvall 5C ® centrifuge. The weight of the added sample (before centrifugation), and the precipitate (after centrifugation) was measured after drying (103.5°C for 12 h), to remove excess water. The powder solubility was calculated as the total solids content of the sample before and after rehydration.

The soluble protein concentration (mg mL$^{-1}$) of the supernatant was determined using the method described by Bradford (Bradford, M., Analytical Biochemistry, 1976, 72: 248-254). A calibration curve using BSA (0.5 mg mL$^{-1}$) was constructed and samples of unknown concentration were diluted 100x before analysis. Finally, all samples were adjusted to the desired protein concentration using ultrapure water.

*Procedure for isolation of $\beta$-casein*

Filtration feed material was prepared at 50 g L$^{-1}$ (w/v) MCC, by rehydration at 45°C, mixing at 7000 rpm for 30 min with a L5M-A Laboratory Mixer (Silverson) followed by mixing at 375 rpm and at 45°C for 3 h to complete hydration.

Filtration was conducted using a Pellicon® 2 Casette unit (Merck Millipore, Tullagreen, Carrigtvvohill, Ireland) (17.8 $\times$ 21 cm), which is a lab-scale, pressure-driven, cross-flow filtration device, using a V-screen 1000 kDa (equivalent to 0.1 $\mu$m) modified polyether sulfone (PES) membrane (Merck Millipore, Tullagreen, Carrigtwohill, Ireland).

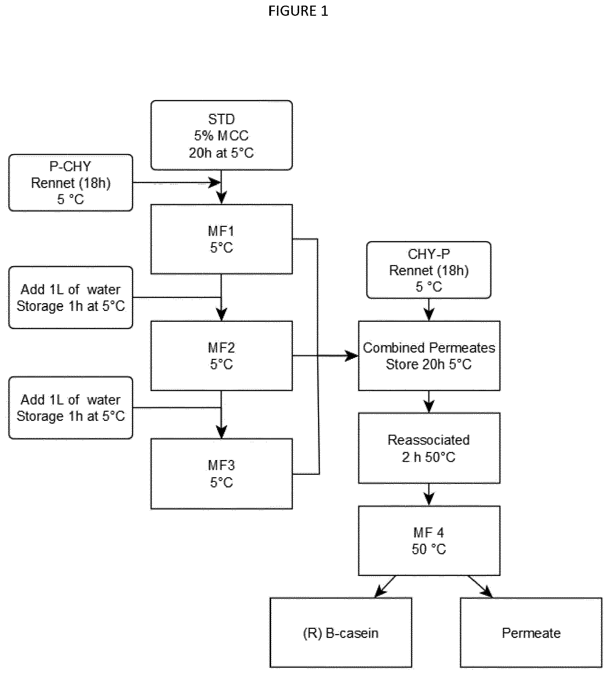

The isolation procedure is schematically represented in Figure 1. In short, 2 L of feed was stored at 5°C for 20 h, to facilitate dissociation of $\beta$-casein. Prior to the membrane filtration (MF) process, the unit was pre-cleaned at 50 °C using full circulation of 20 min using 0.3 N NaOH, full circulation for 20 min using MiliQ water, flushed with 10 L of deionised water, and filled with ultra-pure water. A plate heat exchanger (PHE) was used to control the temperature at either 5 or 50°C, depending on the MF step. The first 30 s of complete circulation (-340 mL) was discarded. To equilibrate the system, 5 min of complete recirculation was applied, whereby both retentate and permeate lines were returned to the feed tank. During filtration, no back pressure was applied. The experimental set-up was randomised to avoid bias and limit the error due to the degradation of the filter cartridge. The MF unit was fully cleaned after each trial according to the method described by Crowley et al. (Crowley et al., International Dairy Journal, 2015, 48: 23-30), with an increased concentration of cleaning agents to 0.3 N NaOH.

During the first MF step, $\beta$-casein was extracted *via* cold (<5°C) MF into the permeate for the standard treatment **(STD)**. Alternatively, a pre-treatment of the feed with chymosin (0.05 IMCU/ml) during 18 h of cold storage was applied **(P-CHY).** Filtration was performed at 5 °C, removing 1 L of permeate ($\beta$-casein enriched), which was replaced by adding 1 L of ultrapure water at 5°C to the feed. The extraction was stopped, and the feed was recirculated for 1 h to facilitate additional dissociation, and this process was performed two times. The combined permeates ($\beta$-casein enriched) fractions composed approximately 3.5 L, leaving 0.5 L of retentate. The permeates were stored at 5°C until the next day for the second, warm, MF step.

In the case of the last chymosin treatment, the permeate ($\beta$-casein enriched) was treated for 18 h during cold storage at 5°C with 0.05 IMCU mL$^{-1}$ chymosin **(CHY-P).** Prior to the second MF step, at 50°C, all the permeate ($\beta$-casein enriched) fractions were combined and reassociated at 50°C for 2 h in a water bath. In total, 3 L of permeate was removed during the warm MF (50 °C), and the retentate (-0.5 L), enriched in $\beta$-casein, was lyophilized until further analysis.

*Reversed-phase high performance liquid chromatography*

Permeate and retentate streams were diluted to an approximate protein concentration of 2 mg mL$^{-1}$ by rapid screening at 280 nm as described by Stoschek (Stoschek, Methods Enzymol., 1990, 182: 50-68) using a spectrophotometer Cary 300 bio® UV-Vis (Varian Inc., Middleburg, the Netherlands) and dispersed (1:1) (v/v) in buffer containing 6 M urea, 0.1 M Bis-Tris buffer, 5.37 mM sodium citrate and 19.5 mM dithiothreitol (pH 7) in a 1:1 ratio (v/v) to obtain approximately 1 mg mL$^{-1}$ final protein concentration. Samples were filtered (0.45 μm), and analysed by reversed-phase *high-performance liquid chromatography* (RP-HPLC) (Agilent 1220 Infinity II LC) equipped with a C18 column (3.6 μm × 250 mm × 4.6 mm, Aeris Widepore, Phenomenex, UK) using the method described by Bonfatti et al. (Bonfatti et al., Journal of Chromatography, 2008, 1195: 101-106). Protein calibration standards for RP-HPLC, including α-, β- and κ-casein, β-lactoglobulin and α-lactalbumin, were used to integrate the area of the chromatograms to mg mL$^{-1}$ using OpenLab CDS (Agilent).

*Ultra-performance liquid chromatography- mass spectrophotometry*

Intact protein and peptide profiles of the lypohilised materials were determined using, ultra-performance liquid chromatography mass-spectrophotometry (UPLC-MS) analysis, as described by Fuerer et al. (Fuerer et al., Journal of Dairy Science, 2020, 103: 1193-1207). It was decided to perform UPLC-MS analysis because of the limitations to quantification using RP-HPLC, as the analytical standards used for the external calibration curves of the RP-HPLC analysis do not always account for standard purity, genotypes and breakdown products coeluting at the same retention time (i.e., γ-caseins, κ-casein glycosylation and genotypes A1, A2 and B of β-caseins). As described by Fuerer et al. (Fuerer et al., Journal of Dairy Science, 2020, 103: 1193-1207), process-induced protein modifications cause peak splits, shifts, and overlaps that prevent accurate results being obtained from the UV-based methods. Results of the detailed UPLC-MS analysis were thus only used to directly compare materials based on profile similarity (MS signal), and not for quantification due to the absence of standards for genotypes and breakdown products. This was possible as all samples were subjected to similar preparation treatments prior to analysis.

*Mineral profiling*

The product streams (feed, permeates, retentates and freeze dried materials) were analysed for their mineral profiles by Eurofins (Madison, WI, USA), following the official Methods of Analysis of AOAC 984.27, 985.01, and 2011.14 using inductively coupled plasma-atomic emission spectroscopy (ICP-AES).

*Residual chymosin activity*

The residual chymosin activity was determined following the method of Hurely et al. (Hurley et al., International Dairy Journal, 1999, 9: 553-558), with minor modifications. Samples were reconstituted in 0.1 M trisodium citrate, and aliquots (140 μL) were incubated with 60 μL of 1 mg mL$^{-1}$ of synthetic heptapeptide substrate (Pro-Thr-Glu-Phe-[NOz-Phe]-Arg-Leu) (Bachem, Switzerland). The sample was made up to 1 mL with 0.1 M sodium formate buffer (pH 3.2) and incubated at 37°C for 4 h. Finally, to stop the reaction, the mixture was heated at 70°C for 10 min. Analysis was performed using RP-HPLC (Agilent 1220 Infinity II LC) with a C18 column (3.6 μm × 250 mm × 4.6 mm, Aeris Widepore, Phenomenex, UK) with detection at 300 nm following the conditions described by Hurley et al. (1999), with minor modifications. The flowrate was modified to 0.5 mL min$^{-1}$ and maximum injection volume was 100 μL. A standard curve of chymosin (M200, Chr. Hanssen) was prepared by replacing the sample volume with a 500 × diluted stock concentration of chymosin. The residual chymosin activity was expressed as International Milk Clotting Unit (IMCU) mL$^{-1}$.

*β-casein purity and yield calculations*

The purity (P) of the β-casein fractions was defined as the ratio of the single casein fraction (β-cn fraction) divided by the total casein content and calculated as follows:

$$Purity = \frac{\beta - cn\ fraction}{total\ casein} * 100\ \% \qquad (1)$$

The yield (Y) of β-casein is defined as the ratio of the amount of the obtained casein fraction to the total amount of the protein in the micellar casein powder and was calculated as follows:

$$Yield = \frac{M\,\beta cn * P\beta cn, ingredient}{M\,feed * P\beta cn, feed} * 100\,\%\qquad(2)$$

where $M_{\beta cn}$ refers to the mass of the obtained β-casein fraction, and $M_{feed}$ to the initial mass of micellar casein (MCC) powder used for the isolation. Purity of the β-casein in manufacture material and the β-casein content in the feed were determined using RP-HPLC.

### Statistical analysis

Nine independent trials were conducted in a randomized order, consisting of three replicates of each MF process. The results are expressed as mean ± standard deviation of the conducted analyse, unless otherwise stated. Analysis of variance (one-way ANOVA; Tukey's HSD test) was performed using IBM SPSS version 28. The level of significance $p < 0.05$ was determined as a statistically significant difference between mean values.

### Results

In this study, a novel filtration process was examined for β-casein purification involving the addition of chymosin during cold storage (5°C) to hydrolyse κ-casein. The impact of chymosin on β-casein hydrolysis and other nonspecific breakdown during this process was also examined. Finally, the influence of κ-casein and its breakdown products on the physiochemical behaviour of β-caseins, such as self-association and micelle size, was studied.

### β-casein material composition, purity and yield upon fractionation

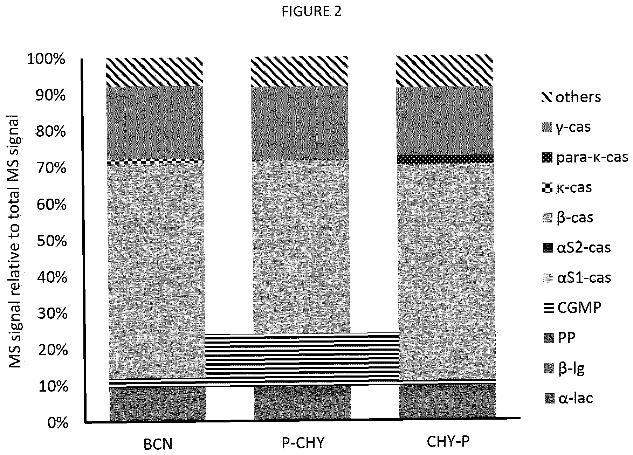

Membrane filtration (MF) in combination with chymosin treatment at cold temperatures (5°C) was used to isolate and purify β-casein from MCC. The yield (Y) and purity (P) of the different fractionation processes described above are presented in Table 1 and the protein composition is displayed in Figure 2. The purity (P) of the β-casein materials was 89.2, 89.9 and 90.7% and the yield (Y) was 11.9, 9.9 and 11.8% for STD, P-CHY and CHY-P, respectively.

Feed samples (50 mg mL$^{-1}$ MCC) were taken at the start of the MF operation, following 20 h storage at 5°C. The total protein content was determined by RP-HPLC and by Kjeldahl using the official method of IDF (2014), showing agreement in total protein contents at 82.5 and 82.7 %(w/w), respectively. The addition of chymosin to P-CHY feedstock for 18 h at 5°C resulted in reduced levels of κ-casein; when a sample was heated to 32°C, a casein gel was observed, indicating that more than 85% of the κ-casein had been hydrolysed. β-casein has two sites which are particularly sensitive to hydrolysis by chymosin (f189- 190/192-193). There was no strong evidence of $\alpha_s$- and β-casein hydrolysis in the feed due to chymosin-treated (P-CHY) with concentrations of $\alpha_s$-casein at 15.5, 15.7 mg mL$^{-1}$ and β-casein at 14.7, 14.7 mg mL$^{-1}$ (RP-HPLC) for STD and P-CHY, respectively.

**Table 1:** Composition, purity (P) and yield (Y) of MCC (feed) and ingredients generated using membrane filtration treatments STD, P-CHY and CHY-P.

| | MCC | STD | P-CHY | CHY-P |
|---|---|---|---|---|
| Protein content (%, w/w of powder) | 82.8 ± 0.32* | 82.5 ± 1.88[a] | 80.3 ± 8.02[a] | 87.6 ± 5.14[a] |
| **Total casein** (%, w/w of total protein) | | | | |
| $\alpha_s$-casein[a] | 38.3 ± 0.86 | N.D. | N.D. | N.D. |
| β-casein[a] | 35.6 ± 0.31 | 89.2 ± 0.97 | 89.9 ± 0.70 | 90.7 ± 3.04 |
| k-casein [a] | 2G.1 f 0.91 | 10.8 ± 0.97 | N.D. | N.D. |
| CMP[b] | N.D. | N.D. | 14.3 ± 1.8 | 0.3 ± 0.1 |
| para-κ-cn[b] | N.D. | N.D. | 0.1 ± 0.1 | 2.4 ± 0.4 |
| **Mineral profile (mg/100g powder)** | | | | |
| Na | 5.41 ± 1.56 | 1.33 ± 0.09 | 3.08 ± 1.12 | 2.43 ± 0.52 |
| Mg | 3.94 ± 0.51 | N.D. | N.D. | N.D. |
| P | 65.4 ± 9.68 | 6.27 ± 0.67 | 6.89 ± 1.44 | 6.07 ± 0.04 |

(continued)

| Mineral profile (mg/100g powder) | | | | |
|---|---|---|---|---|
| K | 7.57 ± 0.15 | N.D. | N.D. | N.D. |
| Ca | 105.9 ± 15.56 | 9.45 t 1.48 | 10.5 ± 1.0 | 8.89 ± 0.78 |
| Purity (P) of β- casein[a] | 35.6 ± 2.0 | 89.2 ± 1.0 | 89.8 ± 0.7 | 90.7 ± 3.0 |
| Yield (Y) | | 11.9 ± 0.3 | 9.9 ± 1.2 | 11.8 ± 1.0 |

\* determined using Kjeldahl

[a] determined using RP-HPLC

[b] determined using UPLC-MS as relative % of MS-signal N.D. = not detected

All three treatments showed the absence of $\alpha_s$-caseins (<0.1%) demonstrating the effectiveness of MF in seperating β-casein from the casein micelles at 5 °C. The observed $\alpha$-la and β-lg contents were similar between treatments (Fig. 2). The major protein profile differences in were expressed in terms of κ-casein, CMP and *para*-κ-casein profile, as affected by chymosin treatment. STD comprised 10.2 ± 0.7 κ-casein as % of total casein (RP-HPLC). UPLC coupled with MS (Fig 2) revealed that treatment with chymosin resulted in the complete removal of κ-casein; the CMP content was 14.3 ± 1.8% and 0.3 ± 0.1% for P-CHY and CHY-P, of the relative MS-signal, respectively. The higher content of CMP for P-CHY can be explained by provision of sufficient substrate (κ-casein) and time during the 18 h of cold dissociation. The breakdown product (CMP) remains mostly in the serum and, as a result, is co-separated with the β-casein. On the other hand, less substrate (κ-casein) was available for treatment CHY-P, therefore resulting in approximately 2.4 ± 0.4 and 0.3 ± 0.1 % of the relative MS signal, for *para*-κ-casein and CMP respectively.

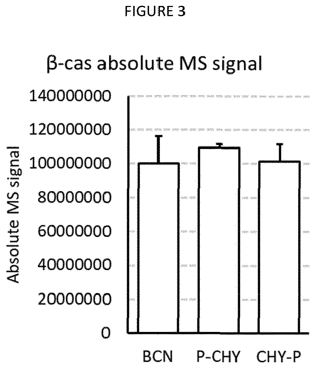

Figure 3 shows that there is no change in the signal intensity following incubation with chymosin between the starting feed (BCN) and the two treatment streams P-CHY and CHY-P. Thus, the chymosin shows minimal breakdown of β-casein.

*Mineral composition of materials*

Cold storage of micellar casein is known to alter the mineral distribution between the micellar and serum phases, which is mainly driven by solubilisation of colloidal calcium phosphate. Application of cold (<10°C) MF to skimmed milk significantly increases the level of ionic calcium in the serum fraction and, as a result, permeate. The mineral composition of the feedstock and filtrates was determined using ICP-AES as shown in Table 1. The total concentration of calcium in feedstock was 1.06 ± 0.16 mg mL$^{-1}$.

Treatment with chymosin showed increased levels of sodium, which may be partially contributed to the material containing 10% (w/v) sodium chloride and 1% (w/v) sodium benzoate. The addition of chymosin (P-CHY, CHY-P) did not substantially influence the phosphorus and calcium levels. The calcium content observed in the permeate enriched in β-casein ~0.1 mg mL$^{-1}$ was lower compared to permeate extracted from skimmed milk by other researchers following cold MF of skimmed milk, at 0.4 mg mL$^{-1}$ . The lower calcium content can be explained to some extent by the feed material used and application of diafiltration during the manufacture; the retentate stream was diluted with 2 L of water in the dissociation process, and a larger volume was removed during the second filtration step. To determine the effect of diafiltration on the removal of calcium, the second MF permeate was analysed. Approximately half of the calcium was found in the removed permeate, thereby reducing the calcium content in the final product. The final calcium concentration was approximately 8-12 mg per 100 g powder.

*Residual chymosin activity*

Samples of STD, P-CHY and CHY-P (10 mg mL-') were incubated for 4 h at 37°C in the presence of hepta-peptide substrate (Pro-Thr-Glu-Phe-[NO$_2$-Phe]-Arg-Leu). There was no breakdown of the substrate observed, and thus no residual chymosin activity was measured for samples STD and P-CHY. Sample CHY-P demonstrated residual chymosin activity at 0.009 ± 0.008 IMCU mL$^{-1}$, which represents approximately 22% of the original activity (0.05 IMCU mL$^{-1}$). The samples used in this study were therefore heated to 70°C for 5 min after rehydration for 2 h, followed by magnetic stirring overnight (~18 h) at 4°C.

All publications mentioned in the above specification are herein incorporated by reference. Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in molecular biology or related fields are intended to be within the scope of the following claims.

**Claims**

1. A method for obtaining β-casein from a milk protein source, the method comprising the steps:

   a) cooling the milk protein source to a temperature sufficient to release β-casein from the micelles containing β-casein; and
   b) separating β-casein from the cooled milk protein source by membrane filtration to form a permeate enriched in β-casein; and

   wherein the method further comprises:

   pre-treating the milk protein source with chymosin before and/or during step a); and/or
   treating the permeate enriched in β-casein with chymosin after step b).

2. The method of claim 1, wherein steps a) and b) are carried out at a temperature of less than about 15 °C.

3. The method of claim 1 or claim 2, wherein steps a) and b) are mperformed for about 6 to about 48 hours.

4. The method of any one of the preceding claims, wherein pre-treating the milk protein source with chymosin and/or treating the permeate enriched in β-casein with chymosin is performed at a temperature of less than about 15 °C.

5. The method of any one of the preceding claims, wherein pre-treating the milk protein source with chymosin and/or treating the permeate enriched in β-casein with chymosin is performed for about 6 to about 48 hours.

6. The method of any one of the preceding claims, wherein the permeate enriched in β-casein obtained in step b) or the chymosin-treated permeate enriched in β-casein obtained after step b) comprises k-casein in an amount of less than about 8 % (w/w of total protein).

7. The method of any one of the preceding claims, wherein the milk protein source is selected from skim milk, whole milk, buttermilk, milk protein concentrate, milk protein isolate, β-casein concentrate, β-casein isolate, micellar casein concentrate and micellar casein isolate.

8. The method of any one of the preceding claims, wherein the β-casein is A2 β-casein.

9. The method of any one of the preceding claims, wherein the milk protein source has been obtained by:

   heating a source material at a temperature sufficient to associate β-casein into micelles;
   depleting whey proteins from the source material by membrane filtration at a temperature sufficient to separate the whey protein from the source material to form a retentate enriched in β-casein;
   diluting the retentate enriched in β-casein to form the milk protein source.

10. The method of any one of claims 1-8, wherein the method further comprises the steps of:

   heating the permeate enriched in β-casein at a temperature sufficient to re-associate the β-casein into micelles, optionally following the step of treating the permeate enriched in β-casein with chymosin;
   depleting whey proteins from the heated permeate enriched in β-casein by membrane filtration at a temperature sufficient to separate the whey protein from the permeate enriched in β-casein to form a retentate enriched in β-casein.

11. The method of claim 9 or claim 10, wherein the retentate enriched in β-casein comprises κ-casein in an amount of less than about 8 % (w/w of total protein).

12. A β-casein enriched product obtained by the method of any one of claims 1-11.

13. A nutritional composition comprising the β-casein enriched product of claim 12.

14. The nutritional composition of claim 13, wherein the nutritional composition is an infant formula, a starter infant formula, a follow-on or follow-up infant formula, a baby food, an infant cereal composition, a growing-up milk, a fortifier or a supplement.

15. A method for making cheese, the method comprising the steps:

pre-treating a milk protein source with chymosin;
cooling the chymosin-treated milk protein source to a temperature sufficient to release β-casein from the micelles containing β-casein;
separating β-casein from the cooled milk protein source by membrane filtration to form a retentate depleted in β-casein; and
using the retentate depleted in β-casein to make cheese.

16. A method for making cheese, the method comprising the steps:

pre-treating a milk protein source with chymosin;
cooling the milk protein source to a temperature sufficient to release β-casein from the micelles containing β-casein;
separating β-casein from the cooled milk protein source by membrane filtration to form a permeate enriched in β-casein;
heating the permeate enriched in β-casein at a temperature sufficient to re-associate the β-casein into micelles;
depleting whey proteins from the heated permeate enriched in β-casein by membrane filtration at a temperature sufficient to separate the whey protein from the permeate enriched in β-casein to form a permeate depleted in β-casein; and
using the permeate depleted in β-casein to make cheese.

FIGURE 1

FIGURE 2

FIGURE 3

β-cas absolute MS signal

Europäisches
Patentamt

European
Patent Office

Office européen
des brevets

**EUROPEAN SEARCH REPORT**

Application Number

EP 23 16 4095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUPPERTZ T ET AL: "A method for the large-scale isolation of beta-casein", FOOD CHEMISTRY, ELSEVIER LTD, NL, [Online] vol. 99, no. 1, 1 January 2006 (2006-01-01), pages 45-50, XP027989499, ISSN: 0308-8146 [retrieved on 2006-01-01] | 1 | INV. A23C9/12 A23C9/142 A23J1/20 A23J3/10 A23L33/19 A23L33/00 A23C19/05 |
| Y | * Section 2.1; page 46 * | 2-5,7 | |
| X | HEKKEN D L VAN ET AL: "Use of cold microfiltration to produce unique beta-casein enriched milk gels", DAIRY SCIENCE AND TECHNOLOGY (LE LAIT), EDP SCIENCES, PARIS, FR, vol. 80, no. 1, 1 January 2000 (2000-01-01), pages 69-76, XP009079444, ISSN: 0023-7302, DOI: 10.1051/LAIT:2000108 | 1 | |
| Y | * Section 2.1; page 70 * | 2,3,7 | **TECHNICAL FIELDS SEARCHED (IPC)** |
| X | US 5 169 666 A (WOYCHIK JOHN H [US]) 8 December 1992 (1992-12-08) | 1-3,6-9, 12-14 | A23C A23J A23L |
| Y | * page 1; example 2; table 3 * | 2-7,10, 11 | |

-/--

The present search report has been drawn up for all claims

| Place of search | Date of completion of the search | Examiner |
|---|---|---|
| Munich | 11 August 2023 | Bender, Pia |

Europäisches
Patentamt

European
Patent Office

Office européen
des brevets

# EUROPEAN SEARCH REPORT

**Application Number**

**EP 23 16 4095**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Fenelon Mark ET AL: "Concept Protein Ingredient for Next-Generation Infant Formula", Technology Updates – Food, 1 September 2018 (2018-09-01), pages 1-4, XP093071496, Retrieved from the Internet: URL:https://www.teagasc.ie/media/website/publications/2015/6291_ProteinIngredientForNextGenerationInfantFormula_MarkFenelon_FOOD.pdf [retrieved on 2023-08-08] * Figure on title page and section 4. Main results * ----- | 6,7 | |
| Y | CA 2 629 427 A1 (WISCONSIN ALUMNI RES FOUND [US]) 18 May 2007 (2007-05-18) * page 24, paragraph 0094; claim 1; figure 3 * ----- | 10,11 | |
| | | | TECHNICAL FIELDS SEARCHED (IPC) |

The present search report has been drawn up for all claims

| Place of search | Date of completion of the search | Examiner |
|---|---|---|
| Munich | 11 August 2023 | Bender, Pia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

EP 4 434 349 A1

## ANNEX TO THE EUROPEAN SEARCH REPORT
## ON EUROPEAN PATENT APPLICATION NO.

EP 23 16 4095

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2023

| Patent document cited in search report | | Publication date | Patent family member(s) | | Publication date |
|---|---|---|---|---|---|
| US 5169666 | A | 08-12-1992 | NONE | | |
| CA 2629427 | A1 | 18-05-2007 | AU | 2006312074 A1 | 18-05-2007 |
| | | | CA | 2629427 A1 | 18-05-2007 |
| | | | EP | 1945039 A1 | 23-07-2008 |
| | | | NZ | 568509 A | 28-10-2011 |
| | | | US | 2007104847 A1 | 10-05-2007 |
| | | | WO | 2007055932 A1 | 18-05-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIEN, E. L.** *The American journal of clinical nutrition,* 2003, vol. 77, 1555S-1558S
- **GAUCHERON, F.** *Reprod. Nutr. Dev.,* 2005, vol. 45, 473-483
- **LAYMAN et al.** *Nutrition reviews,* 2018, vol. 76, 444-460
- **NAKAI, S. ; E. LI-CHAN.** *Food Structure,* 1987, vol. 6
- **CAVELL, B.** *Acta Pædiatrica,* 1981, vol. 70, 639-641
- **HUPPERTZ, T. ; L. W. CHIA.** *International Dairy Journal,* 2021, vol. 113
- **ALMEIDA et al.** *International Journal of Food Science,* 2021, 8850080
- **NIELSEN et al.** *Food Chemistry,* 2017, vol. 232, 673-682
- **ATAMER et al.** *International Dairy Journal,* 2017, vol. 66, 115-125
- **CREAMER et al.** *New Zealand Journal of Dairy Science and Technology,* 1977, vol. 12, 58-66
- **MCCARTHY et al.** *International Dairy Journal,* 2017, vol. 73, 57-62
- **GIBSON GR ; ROBERFROID MB.** Dietary modulation of the human colonic microbiota: introducing the concept of prebiotics. *J Nutr.,* 1995, vol. 125, 1401-12
- **SALMINEN S ; OUWEHAND A ; BENNO Y. et al.** Probiotics: how should they be defined. *Trends Food Sci. Technol.,* 1999, vol. 10, 107-10
- **HURLEY et al.** *International Dairy Journal,* 1999, vol. 9, 553-558
- **CROWLEY et al.** *International Dairy Journal,* 2015, vol. 48, 23-30
- **ZULEWSKA et al.** *J. Dairy Sci.,* 2018, vol. 101, 10831-10843
- **FRANCE et al.** *Foods,* 2021, vol. 10 (9
- **SCHAEFER et al.** *DMW Die Milchwirtschaft,* 2015, vol. 20, 722-726

- **O'MAHONY et al.** *Milchwissenschaft,* 2008, vol. 63, 145-148
- **SCHÄFER et al.** *International Dairy Journal,* 2019, vol. 93, 72-80
- Membrane Processing: Dairy and Beverage Applications (Society of Dairy Technology). Wiley-Blackwell, 2013
- **VASER, R. et al.** *Nature protocols,* 2016, vol. 11 (1), 1-9
- **ADZHUBEI, I. et al.** *Current protocols in human genetics,* 2013, vol. 76 (1), 7-20
- **RENTZSCH, P. et al.** *Genome medicine,* 2021, vol. 13 (1), 1-12
- **IOANNIDIS, N.M. et al.** *The American Journal of Human Genetics,* 2016, vol. 99 (4), 877-885
- **DONG, C. et al.** *Human molecular genetics,* 2015, vol. 24 (8), 2125-2137
- **REVA, B. et al.** *Nucleic acids research,* 2011, vol. 39 (17), e118-e118
- **LANDRUM, M.J. et al.** *Nucleic acids research,* 2016, vol. 44 (D1), D862-D868
- **DEVEREUX, J. et al.** *Nucleic acids research,* 1984, vol. 12 (1), 387-395
- **ALTSCHUL, S.F. et al.** *Journal of molecular biology,* 1990, vol. 215 (3), 403-410
- **TATUSOVA, T.A. ; MADDEN, T.L.** *FEMS microbiology letters,* 1999, vol. 174 (2), 247-250
- **PEARSON, W.R. ; LIPMAN, D.J.** *PNAS,* 1988, vol. 85 (8), 2444-2448
- **MADEIRA, F. et al.** *Nucleic acids research,* 2019, vol. 47 (W1), W636-W641
- **BRADFORD, M.** *Analytical Biochemistry,* 1976, vol. 72, 248-254
- **STOSCHEK.** *Methods Enzymol.,* 1990, vol. 182, 50-68
- **BONFATTI et al.** *Journal of Chromatography,* 2008, vol. 1195, 101-106
- **FUERER et al.** *Journal of Dairy Science,* 2020, vol. 103, 1193-1207